# EUROPÄISCHE PATENTSCHRIFT

(11) **EP 4 013 555 B1**
(45) Veröffentlichungstag und Bekanntmachung des Hinweises auf die Patenterteilung: **14.02.2024**
(21) Anmeldenummer: 20815788.3
(22) Anmeldetag: 26.11.2020
(51) Int. Cl.: B21B 37/00, G05B 19/00, G05B 17/00, B22D 46/00, C21D 11/00

(54) **HERSTELLUNG EINES GEWÜNSCHTEN METALLWERKSTÜCKS AUS EINEM METALLFLACHPRODUKT**
PRODUCTION OF A DESIRED METAL WORKPIECE FROM A FLAT METAL PRODUCT
PRODUCTION D'UNE PIÈCE MÉTALLIQUE SOUHAITÉE À PARTIR D'UN PRODUIT MÉTALLIQUE PLAT

(30) Priorität: 26.11.2019 DE 102019132029
(43) Veröffentlichungstag der Anmeldung: 22.06.2022
(73) Patentinhaber: ThyssenKrupp Steel Europe AG, 47166 Duisburg (DE)
(72) Erfinder: HEITKAMP, Ansgar, 47802 Krefeld (DE); RIDDER, Tobias, 45659 Recklinghausen (DE); ODENHAUSEN, Christian, 46487 Wesel (DE); OVERLÖPER, Daniel, 47051 Duisburg (DE); HAYN, Robin, 47228 Duisburg (DE)
(74) Vertreter: Richardt Patentanwälte PartG mbB
(86) Internationale Anmeldenummer: PCT/EP2020/083523
(87) Internationale Veröffentlichungsnummer: WO 2021/105292

(56) Entgegenhaltungen:
- EP-A1- 2 431 105
- EP-A1- 2 527 053
- EP-A1- 2 540 404
- EP-A1- 3 542 915
- WO-A1-2004/080628
- DE-A1- 10 156 008
- DE-A1-102010 032 185
- DROSSEL WELF-GUNTRAM ET AL: "Das Presswerk auf dem Weg ins das Cyber-physische Zeitalter", ZWF ZEITSCHRIFT FUR WIRTSCHAFTLICHE FERTIGUNG UNDAUTOMATISIERUNG, CARL HANSER VERLAG. MUNCHEN, DE , vol. 111, no. 7-8 30 November 2015 (2015-11-30), pages 460-465, XP009541568, ISSN: 0947-0085, DOI: 10.3139/104.111566 Retrieved from the Internet: URL:https://www.degruyter.com/document/doi /10.3139/104.111566/xml [retrieved on 2017-04-20]

## Beschreibung

Die Erfindung betrifft die Steuerung von Produktionsanlagen für Metallflachprodukte (z.B. Bleche, Bänder), wobei das Metallflachprodukt ein gehaspeltes Band ist, und deren Weiterverarbeitung zu Metallwerkstücken.

Brammen aus verschiedenen Materialien wie beispielsweise Stählen, Kupferlegierungen oder Aluminium werden beispielsweise in Stranggussanlagen hergestellt und anschließend in einem metallverarbeitenden Betrieb, beispielsweise einem Press- oder Walzwerk, weiterverarbeitet. Typischerweise erfolgt die Weiterverarbeitung mehrstufig, beispielsweise einerseits in einem Warmwalzwerk und anschließend in einem Kaltwalzwerk. Das Warmwalzwerk macht sich die Methodik zunutze, die Brammen auf eine entsprechende Temperatur oberhalb der Rekristallisationstemperatur zu erwärmen und im Walzspalt eines Warmwalzwerks durch Druck auf eine vorgegebene Dicke zu reduzieren. Da das Volumen der Bramme gleichbleibt, kommt es zu entsprechenden Längen- und Breitenänderungen. Aufgrund des Warmwalzvorgangs resultiert aus einer Bramme schließlich beispielsweise ein Band, welches auf einem Haspel zu einem sogenannten Coil aufgewickelt wird.

Das Walzen kann unterschiedlich, insbesondere mehrstufig ausgeführt werden. Spricht man vom Warmwalzen, so wird entweder die stranggegossene Bramme auf eine vordefinierte Temperatur oberhalb der Rekristallisationstemperatur (wieder-) erwärmt oder der Gießstrang beim Gießwalzen aus der Gießhitze kommend auf eine vordefinierte Temperatur oberhalb der Rekristallisationstemperatur gehalten oder wiedererwärmt und auf eine vordefinierte Dicke beispielsweise zum Erhalt des Coils warmgewalzt.

Das warmgewalzte Band (Warmband) kann in weiteren Prozessschritten weiterverarbeitet werden, beispielsweise gebeizt, geglüht, gespalten, kaltgewalzt und / oder beschichtet werden. Wird das warmgewalzte Band zum Beispiel zu einem Kaltband kaltgewalzt, so wird dieses weiter in seiner Dicke reduziert und die gewünschten Eigenschaften im Kaltband eingestellt. Wird das warmgewalzte Band oder kaltgewalzte Band gespalten, erfolgt eine Längsteilung aus einem breiten Band zu mehreren schmalen Bändern (Spaltbänder). Wird das warmgewalzte oder kaltgewalzte Band oder Spaltband beschichtet, erfolgt das Beschichten des Bandes mit einem nichtmetallischen oder metallischen Überzug, insbesondere mit einem metallischen Korrosionsschutzüberzug, welcher beispielsweise in einer Schmelztauchbeschichtungsanlage oder alternativ in einer elektrolytischen Beschichtungsanlage aufgebracht werden kann.

Die DE 101 56 008 A1 offenbart ein Steuerverfahren für eine einer Kühlstrecke vorgeordnete Fertigstraße zum Walzen von Metall-Warmband. Spätestens beim Einlaufen von Warmband in die Fertigstraße werden Anfangstemperaturen von Bandpunkten erfasst. Die Bandpunkte werden wegverfolgt. Das Warmband wird in der Fertigstraße Temperaturbeeinflussungen unterworfen. Die Bandpunkte, die Anfangstemperaturen, die Wegverfolgungen und die Temperaturbeeinflussungen werden einem Modell für die Fertigstraße zugeführt. Von dem Modell werden in Echtzeit erwartete Isttemperaturen der Bandpunkte ermittelt und diesen als neue Isttemperaturen zugeordnet.

Die Herstellung eines warmgewalzten Bandes oder kaltgewalzten Bandes oder eines daraus resultierenden Spaltbandes, welches gebeizt, geglüht und / oder beschichtet sein kann, wird in der Regel bei einem Hersteller, im Falle eines Stahlbandes bei einem Stahlhersteller, umgesetzt, welches als Metallflachprodukt der weiterverarbeitenden Industrie (Weiterverarbeiter) zur Verfügung gestellt wird. Der Weiterverarbeiter führt in der Regel bei Eingang eines Metallflachprodukts eine Eingangsprüfung durch. Auf dieser Basis findet u. a. eine Kommissionierung für dessen Weiterverarbeitung statt. Dieser Ablauf bewirkt Aufwand, eine zeitliche Verzögerung und gegebenenfalls Qualitätseinbußen auf Seiten des Weiterverarbeiters. Der Erfindung liegt daher die Aufgabe zugrunde, ein verbessertes Verfahren zur Herstellung eines gewünschten Metallwerkstücks aus einem Metallflachprodukt, eine entsprechende Steuervorrichtung sowie ein das Verfahren implementierende Computerprogrammprodukt zur Verfügung zu stellen. Die der Erfindung zugrunde liegenden Aufgaben werden durch die Merkmale der unabhängigen Patentansprüche gelöst. Ausführungsformen der Erfindung sind in den abhängigen Patentansprüchen angegeben.

Die Aufgabe wird mit einem computerimplementierten Verfahren zur Herstellung eines gewünschten Metallwerkstücks aus einem Metallflachprodukt mit den Merkmalen des Anspruchs 1 gelöst. Gemäß einem Aspekt der Erfindung weist das computerimplementierte Verfahren zur Herstellung eines gewünschten Metallwerkstücks aus einem Metallflachprodukt, wobei das Metallflachprodukt ein gehaspeltes Band ist, folgende Schritte auf:
- Bereitstellen eines Computermodells für eine Herstellung des gewünschten Metallwerkstücks aus dem Metallflachprodukt in einem Verarbeitungsprozess, wobei das Computermodell einen Eingang und einen Ausgang aufweist, wobei der Verarbeitungsprozess einen Verarbeitungsschritt an dem Metallflachprodukt durch ein Verarbeitungsmittel aufweist,
- Empfangen eines das Metallflachprodukt charakterisierenden technischen Datensatzes, wobei zumindest ein Teil der Daten des technischen Datensatzes während der Herstellung des Metallflachprodukts erfasst wurde,
- Übergeben des technischen Datensatzes an den Eingang des Computermodells,
- Aufgrund der Übergabe des technischen Datensatzes, Empfangen eines Modellwertes für einen Betriebsparameter des Verarbeitungsmittels vom Ausgang des Computermodells,
- Herstellen des gewünschten Metallwerkstücks durch Steuern des Verarbeitungsprozesses, wobei die Steuerung des Verarbeitungsprozesses ein Steuern des Verarbeitungsmittels zum Durchführen des Verarbeitungsschritts an dem Metallflachprodukt mit dem auf den Modellwert gesetzten Betriebsparameter aufweist,
wobei das Metallflachprodukt logisch in eine Vielzahl von Segmenten unterteilt ist, wobei der technische Datensatz für jedes der Segmente das Segment charakterisierende technische Daten aufweist.

Ein Aspekt des Verfahrens beruht also darauf, dass der Hersteller eines Metallflachprodukts über entsprechende Material- und Produktionsdaten verfügt, die er z.B. entweder ohnehin für Qualitätsmaßnahmen prozessbegleitend intern dokumentiert bzw. dokumentieren muss oder die er zu Steuerzwecken bei der Herstellung des Metallflachprodukts nutzt oder die explizit zur Durchführung des obig beschriebenen Verfahrens erfasst werden.

Das Verfahren zur Herstellung eines gewünschten Metallwerkstücks aus einem Metallflachprodukt stellt dem Weiterverarbeiter einen technischen Datensatz zur Verfügung, mit welchem er in die Lage versetzt werden könnte, Details zum Metallflachprodukt und / oder seiner Herstellung einsehen und somit analysieren zu können. Dies könnte beispielsweise zeitlich vor dem Empfang des Metallflachprodukts und dessen Durchsatz in den Weiterverarbeitungsmitteln des Weiterverarbeiters geschehen. Eine frühzeitige Bereitstellung des technischen Datensatzes könnte den Vorteil haben, dass die Eingangskontrolle des Metallflachprodukts beim Weiterverarbeiter im Umfang reduziert bzw. nur stichprobenartig, d.h. nicht für jedes empfangene Metallflachprodukt, durchgeführt werden oder sogar vollständig entfallen kann. Eine Eingangsprüfung mit reduziertem Umfang könnte beispielsweise auf vergleichsweise zeitaufwändige manuelle Prüfungen verzichten.

Der technische Datensatz könnte weiterhin als Basis für eine Plausibilitätsprüfung dienen, bei der Daten des technischen Datensatzes z.B. mit Daten aus der Eingangsprüfung verglichen werden. Insbesondere könnte der technische Datensatz Daten enthalten, die im Rahmen einer Eingangsprüfung nicht zugänglich sind, wie beispielsweise bestimmte physikalische oder technische Prozessparameter der Herstellung oder ein Bezeichner einer bestimmten an der Herstellung des Metallflachprodukts beteiligten Produktionsmaschine. Auf diese Weise könnte die Datenbasis der Plausibilitätsprüfung vergrößert werden und so die Plausibilitätsprüfung vereinfacht und / oder verkürzt werden.

Der technische Datensatz könnte zudem eine Identifikation des Metallflachprodukts erleichtern und so das Risiko einer Materialverwechslung reduzieren oder eliminieren. Auf diese Weise könnte eine konstantere Qualität des Metallwerkstücks erzielt und das Risiko von Beanstandungen gesenkt werden.

Zumindest ein Teil der Daten des technischen Datensatzes wird als Eingabe an ein Computermodell übergeben, das den Verarbeitungsprozess des Metallflachprodukts numerisch und / oder analytisch simuliert und dessen Ausgabe einen Modellwert für einen Betriebsparameter eines Verarbeitungsmittels aufweist, das im Rahmen des Verarbeitungsprozesses zur Bearbeitung des Metallflachprodukts in einem Verarbeitungsschritt verwendet werden soll. Dies könnte den Vorteil haben, dass der Verarbeitungsschritt, für den der Modellwert erhalten wurde, auf Basis der tatsächlichen Eigenschaften des individuellen Metallflachprodukts durchgeführt werden kann anstatt beispielsweise auf Basis von Erfahrungs-, Standard-, Soll-, Pauschal- oder Durchschnittswerten. Dies kann zusätzlich oder alternativ eine Prozessoptimierung und / oder Effizienzsteigerung ermöglichen. Ebenfalls könnte das Risiko von Qualitätsschwankungen des Metallwerkstücks reduziert werden.

Des Weiteren könnte auf Basis des technischen Datensatzes und / oder des Modellwerts eine optimierte Reihenfolge in der Weiterverarbeitung(skette) ermöglicht werden, was sich durch z.B. eine Erhöhung der Auslastung der Verarbeitungsmittel, eine Verringerung der Durchlaufzeiten der Metallflachprodukte durch die Verarbeitungsanlage (beispielsweise durch Reduzierung der Anzahl von Materialwechseln je Verarbeitungsmittel) und / oder eine Einsparung der für den Betrieb der Verarbeitungsmittel benötigten Energie vorteilhaft auswirken könnte. Auch die Zuteilung von Metallflachprodukten als Ausgangsmaterial zur Herstellung bestimmter Metallwerkstücke könnte anhand von bestimmten gewünschten Eigenschaften der Metallwerkstücke optimiert werden, was sich ebenfalls vorteilhaft auf die Qualität der Metallwerkstücke auswirken könnte.

Einige der in dieser Offenbarung verwendeten Begriffe und Sachverhalte sind gemäß den nachfolgenden Definitionen und Klarstellungen zu verstehen. So wird hierin unter einem Metallflachprodukt ein Stück Halbzeug aus einem Metall, einem Stahl oder einer Metalllegierung verstanden, dessen Geometrie eine Zuordnung eines Nennwerts für eine Dicke erlaubt, der klein gegenüber jeder weiteren zuordenbaren Nenn-Gesamtabmessung (z.B. Breite, Länge in, soweit zutreffend, vollständig entfaltetem oder abgerolltem Zustand) ist. Dabei bezeichnet "klein gegenüber" einen Unterschied von einem Faktor von mindestens 10, vorzugsweise mindestens 100. Das Metallflachprodukt kann optional einen nichtmetallischen Anteil enthalten (z.B. im Stahl gelösten Kohlenstoff oder einen Kunststoffüberzug), wobei das Gewicht des nichtmetallischen Anteils klein gegenüber dem Gewicht des metallischen Anteils ist. Bevorzugt besteht das Metallflachprodukt aus einem Stahlwerkstoff. Denkbar ist beispielsweise auch die Verwendung eines Aluminiumwerkstoffs.

Die vorliegende Beschreibung bezieht sich auf ein Metallflachprodukt, aus dem in einem Verarbeitungsprozess ein gewünschtes Metallwerkstück hergestellt werden soll. Der Verarbeitungsprozess weist einen Verarbeitungsschritt oder eine zeitliche Reihenfolge mehrerer Verarbeitungsschritte auf. Dabei beinhaltet jeder Verarbeitungsschritt eine physikalische und / oder chemische Änderung an dem Metallflachprodukt oder einem daraus hervorgehenden Zwischenprodukt. Dabei gelten gleichzeitig durchgeführte elementare Änderungen als ein einzelner Verarbeitungsschritt der Reihenfolge.

Zu Beispielen eines Verarbeitungsschritts zählen, ohne Beschränkung auf das Genannte, eine Wärmebehandlung, ein Teilen und / oder eine Umformung. Eine Wärmebehandlung kann gezielt zur Einstellung spezieller Eigenschaften im herzustellenden Metallwerkstück umfassen. Ein Weiterverarbeitungsmittel zur Wärmebehandlung kann einen Ofen, beispielsweise einen Durchlaufofen umfassen. Sollen vordefinierte Eigenschaften, wie zum Beispiel hohe Festigkeiten / Härten in dem Metallwerkstück eingestellt werden, kann das Weiterverarbeitungsmittel neben dem Ofen auch eine Abkühlvorrichtung zum gezielten Abkühlen des warmen Metallwerkstücks bzw. des warmen Metallflachprodukts umfassen. Ein Teilen kann gezielt zur Querteilung, beispielsweise zu Platten oder Blechen, und / oder zur Längsteilung, insbesondere ebenfalls zu Platten oder Blechen oder zu Spaltbändern, des Metallflachprodukts eingesetzt werden. Eine Umformung enthält eine Formänderung im Vergleich zum vorhergehenden Zustand und kann ein Profilieren, ein Rollformen, ein Abkanten, ein Tiefziehen oder dergleichen umfassen.

Weist der Verarbeitungsprozess genau einen Verarbeitungsschritt auf, so überführt dieser Verarbeitungsschritt das Metallflachprodukt direkt aus dem Ausgangszustand in das gewünschte Metallwerkstück. Weist der Verarbeitungsprozess mehr als einen Verarbeitungsschritt auf, so überführt jeder Verarbeitungsschritt der Reihenfolge, abgesehen vom letzten Verarbeitungsschritt der Reihenfolge, das Metallflachprodukt in einen anderen Zwischenzustand und der letzte Verarbeitungsschritt der Reihenfolge überführt das Metallflachprodukt aus seinem letzten Zwischenzustand in das gewünschte Metallwerkstück. Somit erstreckt sich die Definition des Metallflachprodukts von dessen Ausgangszustand bis einschließlich zu seinem letzten Zwischenzustand und erst nach Vollendung des letzten Verarbeitungsschritts ist das Metallwerkstück anstelle des Metallflachprodukts gegeben.

Durch die Übertragung des technischen Datensatzes, der während der Herstellung erfasste, das Metallflachprodukt charakterisierende Daten aufweist, und dessen Verwendung zur Bestimmung eines Wertes (des Modellwertes) für einen Betriebsparameter eines Verarbeitungsschrittes des Verarbeitungsprozesses, der das Metallflachprodukt in das Metallwerkstück überführt, kann der Verarbeitungsprozess durch Einzelheiten der Herstellung des Metallflachprodukts beeinflusst werden. Dabei umfasst die Herstellung des Metallflachprodukts sämtliche Be- und Verarbeitungsschritte am Material oder den Materialien des Metallflachprodukts zwischen dem Abschluss der chemischen Darstellung dieser Materialien (z.B. Einstellen der chemischen Zusammensetzung der Schmelze im Hochofen) und dem Ausgangszustand des Metallflachprodukts. Der Ausgangszustand ist gekennzeichnet durch ein thermodynamisches, chemisches und mechanisches Gleichgewicht des Metallflachprodukts mit seiner Umgebung in Abwesenheit technischer Mittel mit Ausnahme lager- und transporttechnischer Vorrichtungen. Zusätzlich wird hierin die Herstellung des Metallflachprodukts erst dann als abgeschlossen erachtet, wenn der technische Datensatz vollständig vom Verarbeiter empfangen wurde und für dessen spontanen Zugriff frei verfügbar ist.

Ohne Einschränkung der Allgemeinheit kann der technische Datensatz beispielsweise Messdaten aufweisen, die während der Herstellung des Metallflachprodukts aufgenommen wurden, d.h. während der Durchführung eines Herstellungsschritts (z.B. Gießen, Beizen, Teilen) und / oder nach einem Herstellungsschritt an einem daraus hervorgehenden Zwischenprodukt. Der technische Datensatz kann auch aus beispielsweise während der Herstellung des Metallflachprodukts gemessenen Messdaten berechnete Daten enthalten. Der technische Datensatz kann ferner beispielsweise einen Parameterwert aufweisen, der für eine an der Herstellung des Metallflachprodukts beteiligte Produktionsvorrichtung während der Herstellung gesetzt war. Beispielsweise können dem technischen Datensatz statische Informationen, wie etwa eine Maschinenkennung einer an der Herstellung des Metallflachprodukts beteiligten Produktionsvorrichtung, und / oder dynamische Informationen, wie beispielsweise ein Zeitstempel oder ein Bezeichner für einen die Herstellung des Metallflachprodukts überwachenden Mitarbeiter, hinzugefügt werden. Solche hinzugefügten Informationen könnten z.B. in einem Speicher einer Steuerungsvorrichtung hinterlegt sein, die die Produktionsanlage zur Herstellung des Metallflachprodukts steuert.

In jedem Fall ist, analog zur Definition der Herstellung des Metallflachprodukts, die Erzeugung des technischen Datensatzes als abgeschlossen zu betrachten, wenn der Verarbeiter den technischen Datensatz vollständig empfangen hat und auf diesen spontan zugreifen kann. Dies bedeutet, dass die Daten des technischen Datensatzes bereits vor ihrem Empfang durch den Verarbeiter zwar gespeichert sein können, aber von diesem nicht oder nicht vollständig gelesen werden können. Erst durch den Empfang dergenannten Daten wird dertechnische Datensatz dem Verarbeiter zugänglich. Damit unterscheidet sich der technische Datensatz von weiteren Daten, die beispielsweise am fertigen Metallflachprodukt gemessen werden, aber entweder nicht an den Verarbeiter übertragen werden (interne Daten des Herstellers), oder die (beispielsweise im Rahmen einer Eingangsprüfung) direkt nach ihrer Erfassung ohne vorherige Speicherung für den Verarbeiter verfügbar sind, oder die in jedem gespeicherten Zustand öffentlich frei lesbar sind. Insofern kann der Schritt des (physischen) Empfangens des technischen Datensatzes auch als Freigabe eines Speicherplatzes mit kontrolliertem Zugriff implementiert sein, sodass der Verarbeiter den technischen Datensatz zu einem wahlfreien Zeitpunkt nach der Freigabe physisch empfangen kann. Dies schließt auch eine dauerhafte Freigabe eines Speicherplatzkontingents (z.B. eines Netzwerkordners) ein, auf das der Verarbeiter einen privilegierten, aber zeitlich wahlfreien Zugriff hat und das sich somit von öffentlichen Daten unterscheidet. Der Empfang des technischen Datensatzes ist also spezifisch für den empfangenden Verarbeiter.

Die Datentypen, -schlüssel oder -kategorien des technischen Datensatzes können zwischen dem Hersteller des Metallflachprodukts und dem Weiterverarbeiter vereinbart werden. Dies kann beispielsweise eine Identifikation der Informationsbedarfe z.B. für eine optimierte Zerlegung des Metallflachproduktes in Teilsegmente und deren individuelle Weiterverarbeitung beinhalten. Dies erfordert bereits bei der Datenbereitstellung die differenzierte Betrachtung des gesamten Bandes in dynamisch festlegbaren Segmenten. Ferner kann es erforderlich sein, besondere Anforderungen für die Erfassung der Daten an Produktionsanlagen auf Seiten des Lieferanten zu formulieren. Die Bereitstellung des technischen Datensatzes kann eine herstellerseitige Erweiterung der Plausibilisierung und Validierung der erfassten Daten nach Anforderungen des Verarbeitungsbetriebs erforderlich machen. Die Daten des technischen Datensatzes können im Hinblick auf Bedürfnisse des Verarbeitungsbetriebs in aufbereiteter Form bereitgestellt werden, z.B. in Form von inhaltlichen Interpretationen wie etwa einer Anwendungsfallprüfung oder durch spezifische Informationsdarstellungsformen wie beispielsweise Ampel-Logiken, konkrete Werte, Diagramme usw. Auch die Form der Bereitstellung der Daten (zum Beispiel vollautomatisiert, auf Abruf, einzelfallbezogen) kann zwischen Hersteller und Weiterverarbeiter vereinbart werden.

Analog zum technischen Datensatz und ohne Einschränkung der Allgemeinheit kann der Verarbeitungsdatensatz beispielsweise Messdaten aufweisen, die während der Verarbeitung des Metallflachprodukts aufgenommen wurden, d.h. während der Durchführung eines Verarbeitungsschritts (z.B. Richten, Umformen, Fügen) und / oder nach einem Verarbeitungsschritt an einem daraus hervorgehenden Zwischenprodukt. Der Verarbeitungsdatensatz kann auch aus beispielsweise während der Verarbeitung des Metallflachprodukts gemessenen Messdaten berechnete Daten enthalten. Der Verarbeitungsdatensatz kann beispielsweise ferner einen Parameterwert aufweisen, der für eine an der Verarbeitung des Metallflachprodukts beteiligte Verarbeitungsvorrichtung während der Herstellung des gewünschten Metallwerkstücks gesetzt war. Beispielsweise können dem Verarbeitungsdatensatz statische Informationen, wie etwa eine Maschinenkennung einer an der Herstellung des Metallwerkstücks beteiligten Verarbeitungsvorrichtung, und / oder dynamische Informationen, wie beispielsweise ein Zeitstempel oder ein Bezeichner für einen die Herstellung des Metallwerkstücks überwachenden Mitarbeiter, hinzugefügt werden. Solche hinzugefügten Informationen könnten z.B. in einem Speicher einer Steuerungsvorrichtung hinterlegt sein, die die Verarbeitungsanlage zur Herstellung des Metallwerkstücks steuert.

Der Hersteller des Metallflachprodukts und der (Weiter-)Verarbeiter, also der Hersteller des Metallwerkstücks aus dem Metallflachprodukt, bilden zumindest bezüglich des technischen Datensatzes zwei unabhängige Entitäten. Dies bedeutet, dass der Verarbeiter wirtschaftlich entweder mit dem Hersteller des Metallflachprodukts zusammenhängen (also z.B. verschiedene Abteilungen desselben Unternehmens, zwei verschiedene Tochter- oder Schwesterunternehmen derselben Unternehmensgruppe, Joint-Venture-Partner oder anderweitig durch gemeinsame Rechnung und / oder Organisation miteinander verbundene Unternehmen) oder eigenständig organisiert sein kann; in jedem Fall hat der Verarbeiter ohne den vollzogenen Schritt der Bereitstellung des technischen Datensatzes keinen spontanen Zugriff auf die Daten des technischen Datensatzes. Analog gilt für den Fall, dass der Verarbeiter während der Verarbeitung einen Verarbeitungsdatensatz erzeugt und diesen als Datenrückfluss an den Hersteller des Metallflachprodukts übermittelt, dass der Hersteller des Metallflachprodukts vor der besagten Übermittlung keinen spontanen Zugriff auf die Daten des Verarbeitungsdatensatzes hat.

Unter einem Computermodell ist hierin jegliche Art der Vorhersage der Veränderung der physikalischen Eigenschaften des Metallflachprodukts und / oder eines daraus gefertigten Zwischenprodukts durch ein oder mehrere Verarbeitungsmittel zu verstehen. Dertechnische Datensatz des Metallflachprodukts dient dabei als Eingangsgröße. Die Modellierung selbst kann beispielsweise anhand mathematischer Modelle in analytischer, heuristischer, direkt numerischer oder approximativ numerischer Form erfolgen. Auch der Einsatz neuronaler Netzwerke ist möglich, wobei dadurch die tatsächliche Weiterverarbeitungseigenschaft der / des Verarbeitungsmittel(s) Berücksichtigung finden kann und damit auch der entsprechende Charakter eines jeweiligen Weiterverarbeitungsmittels in die Modellierung einfließen kann. Als Ausgangsgröße wird mindestens ein Modellwert für einen Betriebsparameter bereitgestellt, welcher zur Steuerung wenigstens eines an dem Verarbeitungsprozess des Metallflachprodukts hin zum gewünschten Metallwerkstück beteiligten Verarbeitungsmittels verwendet wird.

Ein typischer Verarbeitungsschritt ist das Umformen. Daher kann es sich bei dem Metallwerkstück, ohne Einschränkung, um ein Formteil wie beispielsweise ein offenes Profil oder ein Rohr handeln. Im nicht-ausschließlichen Beispiel einer Produktion eines geschweißten Rohres wird zunächst ein bandförmiges Metallflachprodukt bereitgestellt, welches abhängig von der Größe bzw. von dem Durchmesser des zu erzeugenden Rohrs als ungespaltenes Band oder als Spaltband, welches im Rahmen eines Spaltens und / oder Längsteilens eines ungespaltenen Bands erstellt worden ist. In dem Beispiel ist der technische Datensatz zu dem Metallflachprodukt vor Erhalt des Metallflachprodukts vom Metallflachprodukthersteller vorab übermittelt worden, so dass aufgrund der Verarbeitung des technischen Datensatzes durch das Computermodell mindestens ein Betriebsparameter bereitgestellt werden kann, mit welchem das Verarbeitungsmittel angesteuert werden kann.

Als Verarbeitungsmittel dient in dem Beispiel u.a. eine Rollprofiliervorrichtung, in welcher das Band / Spaltband zu einem rohrförmigen Schlitzband geformt wird. Dieses durchläuft anschließend eine Schweißvorrichtung, in welcher der Schlitz, also die zwei Längskanten des Bandes, insbesondere im Stumpfstoß, stoffschlüssig verbunden werden und sich somit ein rohrförmiges Band mit geschlossenem Querschnitt einstellt. Dabei ist nach der Schweißvorrichtung ein weiteres Mittel zur Querteilung des rohrförmigen Bandes angeordnet, um das rohrförmige Band in einzelne Rohre mit endlicher Länge abteilen und bereitstellen zu können. Bei Bedarf kann vor dem Rollprofilieren das Metallflachprodukt in Form eines Bandes oder Spaltbandes einem Richtprozess zugeführt werden, um eine vordefinierten Planheit im Band einstellen zu können, und optional davor oder danach einem Besäumprozess zum Besäumen der Längskanten, um eine definierte Breite und / oder ein definiertes Kantenprofil für den Schweißprozess einstellen zu können.

Zu beispielhaften Verarbeitungsschritten zählen insbesondere:
- Teilen, z.B. Stanzen, Schneiden, Querteilen, Längsteilen;
- Umformen, z.B. Profilieren, Rollformen, Pressen, Abkanten (Gesenkbiegen), Ziehen, Tiefziehen, Schmieden, Walzen, Verdrehen, Bombieren;
- Wärmebehandlung, z.B. Glühen, Härten, Randschichthärten, thermochemisches Oberflächenhärten, Vergüten, Bainitisieren, Perlitisieren;
- Richten, z.B. Streckbiegerichten, Flammrichten;
- Fügen, z.B. formschlüssig (z.B. Nieten, Durchsetzfügen (Clinchen)), kraftschlüssig (z.B. Verschrauben), stoffschlüssig (z.B. Schweißen, Löten, Kleben);
- Oberflächenveredelung, z.B. Lackieren, Beschichten, Galvanisieren, Verzinken, Emaillieren, Aufwalzen, Aufkleben, Aufschmelzen, Tauchen, Sprühen, Flammspritzen, Wirbelsintern;
- Erzeugung von Verbundwerkstoffen, z.B. Metall / Kunststoff oder Metall / Keramik.

Zu einer beispielhaften Liste möglicher Schritte im Rahmen der Herstellung des Metallflachprodukts zählen:
- Schmelzen;
- Gießen;
- Walzen, z.B. Warmwalzen, Kaltwalzen;
- Beizen;
- Glühen;
- Beschichten, z.B. elektrolytisch, Feuerverzinken, Bandbeschichten, Lackieren;
- Dressieren;
- Erzeugung von Verbundwerkstoffen, z.B. Metall / Kunststoff oder Metall / Keramik;
- Inspizieren / Reparieren;
- Spalten (längs, quer) / Teilen / Stanzen.

In einem nicht einschränkenden Beispiel kann der Betriebsparameter einen variablen Stellwert des Verarbeitungsmittels (z.B. Verarbeitungsgeschwindigkeit, Stanzmaße), eine bei der Verarbeitung auf das jeweils verarbeitete Zwischenprodukt einwirkende physikalische oder chemische Größe (z.B. Kraft, Temperatur, Ätzmittelkonzentration) und / oder eine durch den Verarbeitungsschritt zu realisierende gewünschte Eigenschaft des resultierenden Zwischenprodukts oder Werkstücks (z.B. Dicke einer Galvanisierungsschicht, Biegesteifigkeit, Härte) aufweisen.

Gemäß einer Ausführungsform weist der technische Datensatz geometrische Daten, materialspezifische Daten und / oder oberflächenspezifische Daten des Metallflachprodukts auf. Dies könnte den Vorteil haben, dass die Bearbeitung des Metallflachprodukts durch das Verarbeitungsmittel mithilfe des Betriebsparameter-Modellwerts automatisch und realdatenbasiert auf Schwankungen und Besonderheiten der Abmessungen, des Materials und / oder der Oberflächenbeschaffenheit des Metallflachprodukts angepasst werden kann.

Dabei beziehen sich Geometrische Daten des Datensatzes auf die Länge, Breite, Dicke und / oder Bombierung des Metallflachprodukts und materialspezifische Daten beziehen sich auf die Eigenschaften des Metallflachprodukts, beispielsweise mechanische Eigenschaften wie Zugfestigkeit, Dehnung, Gefügestruktur usw. Oberflächenspezifische Daten kommen beispielsweise dann zum Tragen, wenn das Metallflachprodukt auch mit einem nichtmetallischen und / oder metallischen Überzug beschichtet ist, so dass lokale Schwankungen der Zusammensetzung und / oder Dicke des Überzugs Berücksichtigung finden können.

Gemäß einer Ausführungsform weist die Herstellung des Metallflachprodukts einen Herstellungsschritt auf, wobei der Herstellungsschritt ausgewählt ist aus einem Gießen, einem Warmwalzen, einem Kaltwalzen, einem Beizen, einem Glühen, einer Oberflächenveredelung und einem Dressieren, wobei der während der Herstellung des Metallflachprodukts erfasste Teil des technischen Datensatzes einen Parameter des Herstellungsschritts oder einen während des Herstellungsschritts erfassten Messwert aufweist. Auf diese Weise könnten aus den technischen Umständen des Gießens, des Warm- oder Kaltwalzens, des Beizens, des Glühens, der Oberflächenveredelung und /oder des Dressierens resultierende spezifische Eigenschaften des individuellen Metallflachprodukts bei der Durchführung des Verarbeitungsschritts mit dem diese spezifischen Eigenschaften widerspiegelnden Modellwert des Betriebsparameters des den Verarbeitungsschritt an dem Metallflachprodukt durchführenden Verarbeitungsmittels durch die auf diese Weise an die individuellen Eigenschaften angepasste Funktionsweise des Verarbeitungsmittels berücksichtigt werden. Es versteht sich, dass der technische Datensatz einen oder mehrere solcher Parameter enthalten kann.

Gemäß einer Ausführungsform ist der Parameter des Herstellungsschritts ausgewählt aus einer Bezeichnung eines Gießverfahrens, einer Gießtemperatur, einer Bezeichnung eines Walzverfahrens, einer Walzgeschwindigkeit, einer Walzdicke, einer Walzenrauigkeit, einer Walzenballigkeit, einer Bezeichnung eines Beizverfahrens, einer Glühtemperatur, einer Glühdauer, einer Bezeichnung eines Oberflächenveredelungsverfahrens, einer Bezeichnung eines für die etwaige Oberflächenveredelung verwendeten Materials, einer Bezeichnung eines Dressierverfahrens und einem Dressiergrad. Beispielsweise könnte das Verarbeitungsmittel durch Setzen des Betriebsparameters auf den Modellwert eine von dem Gießverfahren, der Gießtemperatur, dem Walzverfahren, der Walzgeschwindigkeit, der Walzdicke, der Walzenrauigkeit, der Walzenballigkeit, dem Beizverfahren, der Glühtemperatur, der Glühdauer, dem Oberflächenveredelungsverfahren, dem für die etwaige Oberflächenveredelung verwendeten Material, dem Dressierverfahrens und / oder dem Dressiergrad auf bekannte Weise abhängige physikalische Eigenschaft des Metallflachprodukts (z.B. Steifigkeit, Härte, Zähigkeit, (spezifische) Festigkeit, Duktilität, Sprödigkeit, Oberflächenrauigkeit, Abweichungen von der Nenngeometrie) berücksichtigen.

Gemäß einer Ausführungsform weist der technische Datensatz einen etwaigen Fehler des Metallflachprodukts charakterisierende Daten auf. Ein Fehler wird hierin als Produktionsfehler des Metallflachprodukts verstanden, d.h. eine Abweichung einer physikalischen oder Materialeigenschaft des Metallflachprodukts von einem bei Lieferung erwarteten Nenn-, Norm- oder Sollzustand. Zu einer nicht erschöpfenden Liste typischer Fehler zählen eine Seigerung, ein Lunker, ein Riss, eine Pore, eine Fehlstelle, ein Einschluss und eine Ablösung einer Beschichtung. Sichtbare Fehler können beispielsweise an der Oberfläche des Metallflachprodukts mit geeigneten Mitteln, wie zum Beispiel mittels Induktion oder bildgebenden Verfahren, und nicht sichtbare Fehler innerhalb des Metallflachprodukts mit geeigneten Mittel, wie zum Beispiel mittels Ultraschall, detektiert werden. Ein Fehler kann beispielsweise charakterisiert werden durch eine Bezeichnung der Art des Fehlers, seine Position (ohne Einschränkung z.B. in zwei Koordinaten bei vernachlässigbarer Dicke des Metallflachprodukts, etwa bei einem Coil-Blech oder einer Metallfolie, oder z.B. in drei Koordinaten bei signifikanter, strukturell bearbeitbarer Dicke, etwa bei einem Grobblech mit Dicke 20 mm oder 160 mm) und / oder seine Größe und Form charakterisierende geometrische Informationen (z.B. Kreis mit Kreisdurchmesser, Polygon mit einer oder mehreren Kantenlänge(n)).

Die Kommunikation eines Fehlers mithilfe des technischen Datensatzes könnte es dem Verarbeiter ermöglichen, den Fehler bei der Verarbeitung des Metallflachprodukts zu berücksichtigen, z.B. durch Nichtverwenden des Bereichs, in den sich der Fehler befindet, durch Hinzufügen eines geeigneten Reparaturschritts zum Verarbeitungsprozess oder durch Mitverarbeiten des Fehlers, falls dieser die Funktion des Metallwerkstücks nicht beeinträchtigt, möglicherweise verbunden mit z.B. einem Drehschritt, der das Metallflachprodukt in eine Orientierung überführt, bei der der Fehler nach Abschluss des Verarbeitungsprozesses an einer unkritischen Position des gewünschten Metallwerkstücks platziert ist. Der Empfang der Fehlercharakterisierung kann optional zusätzlich oder alternativ über einen vom Übertragungskanal der übrigen Daten des technischen Datensatzes (z.B. sitzungsbasierte Abholung des Datensatzes aus einem Fernzugriffsspeicher) getrennten Weg erfolgen (z.B. durch Empfang einer Hinweis-E-Mail) und beispielsweise auf einem Ausgabegerät (z.B. Bildschirm, Lautsprecher) als Meldung ausgegeben werden.

Gemäß einer Ausführungsform weist das Metallflachprodukt eine Oberflächenveredelung und / oder eine Beschichtung auf. In diesem Fall könnte das Metallflachprodukt einen Fehler aufweisen, der von der Beschichtung oder der sonstigen Oberflächenveredelung verdeckt wird, sodass dieser selbst bei einer Eingangsprüfung möglicherweise nicht gefunden werden könnte. Wird der Fehler jedoch bei der Herstellung des Metallflachprodukts entdeckt, so können z.B. in einem Inspektionsschritt vor dem Auftrag der Oberflächenveredelung den Fehler charakterisierende technische Daten erfasst und in den technischen Datensatz aufgenommen werden. Der Empfang einer Fehlercharakterisierung für einen unsichtbaren Fehler könnte somit den Vorteil einer konstanteren Qualität des Metallwerkstücks bewirken. Bei einer Beschichtung kann es sich insbesondere um einem metallischen Korrosionsschutzüberzug oder einen nichtmetallischen Überzug, beispielsweise in Form einer Folie (Folienbeschichtung) oder in Form eines Lacks (Lackbeschichtung) handeln.

Gemäß einer Ausführungsform wird das Metallwerkstück in einem Verarbeitungswerk hergestellt, wobei das Verarbeitungswerk das Metallflachprodukt und den technischen Datensatz von einem metallverarbeitenden Betrieb (z.B. einem Press- oder Walzwerk) empfängt. Dies könnte den Vorteil haben, dass eine Produktionssteuerungsanlage des Verarbeitungswerks infolge des Empfangs des technischen Datensatzes Zugriff auf die darin enthaltenen, das Metallflachprodukt charakterisierenden technischen Informationen erhält, die andernfalls als interne Informationen des metallverarbeitenden Betriebs behandelt würden und somit von Seiten des Verarbeitungswerks nicht zugegriffen werden könnten. Somit könnte das Verarbeitungswerk diese Informationen, durch Ermitteln des Modellwertes für den Betriebsparameter des Verarbeitungsmittels wie hierin beschrieben, bei der Produktion des Metallwerkstücks aus dem Metallflachprodukt mithilfe des auf den Modellwert des Betriebsparameters eingestellten Verarbeitungsmittels berücksichtigen.

Ein Beispiel für ein Verarbeitungswerk ist ein sogenanntes Stahl-Service-Center (SSC). SSCs verfügen über Verarbeitungsmittel, die zur Weiterverarbeitung von Metallflachprodukten dienen, und definieren für die Hersteller von Metallflachprodukten Schnittstellen zu Endabnehmern (Weiterverarbeiter), so dass gewünschte Zielprodukte (Metallwerkstücke) bereitgestellt werden können. So können SSCs schon vor Erhalt des Metallflachprodukts den entsprechenden technischen Datensatz zu dem Metallflachprodukt von den Metallflachproduktherstellern zur Verfügung gestellt bekommen, sodass diese entsprechend planen und kommissionieren könnten, dass Eingangskontrollen und Stillstände verringert, Durchlaufzeiten optimiert und die Planungssicherheit des Verarbeitungsprozesses im Zusammenhang mit zahlreichen seitens des SSC vorgesehenen weiteren Verarbeitungsprozessen verbessert werden könnte. Diesbezüglich könnten die SSCs den Endabnehmern auch Belieferungstermine schneller mitteilen und entsprechend zusichern bzw. halten.

Gemäß einer Ausführungsform weist das Verfahren zur Herstellung eines gewünschten Metallwerkstücks aus einem Metallflachprodukt zusätzlich ein Erfassen eines den Verarbeitungsschritt charakterisierenden Verarbeitungsdatensatzes während der Durchführung des Verarbeitungsschritts an dem Metallflachprodukt sowie ein Übertragen des Verarbeitungsdatensatzes an den metallverarbeitenden Betrieb zur Anpassung einer Steuerung einer Produktionsanlage des metallverarbeitenden Betriebs auf Basis des Verarbeitungsdatensatzes auf. Der auf diese Weise eingerichtete Datenrückfluss vom Verarbeitungswerk zum metallverarbeitenden Betrieb könnte es dem metallverarbeitenden Betrieb ermöglichen, Prozessparameter bei der zukünftigen Herstellung weiterer Metallflachprodukte so anzupassen, dass bestimmte Eigenschaften der zukünftigen Metallflachprodukte für einen oder mehrere der Verarbeitungsschritte optimiert sind. Beispielsweise ließen sich auf diese Weise systematische Abweichungen der Geometrie des Metallflachprodukts von einem bekannten Bedarf des Verarbeitungswerks erkennen und seitens des metallverarbeitenden Betriebs reduzieren oder eliminieren, sodass in dem Beispiel ein zusätzlicher Verarbeitungsschritt zur Korrektur der systematischen Maßabweichungen (Besäumung) weniger aufwändig werden oder sogar entfallen könnte.

Gemäß einer Ausführungsform ist das Verarbeitungsmittel ausgewählt aus einer Umformvorrichtung, einer Teilvorrichtung, einer Fügevorrichtung, einer Wärmebehandlungsvorrichtung, einer Richtvorrichtung, einer Sortiervorrichtung, einer Oberflächenveredelungsvorrichtung und einer Vorrichtung zur Herstellung von Verbundwerkstoffen, wobei der Betriebsparameter eine Einstellung des Verarbeitungsmittels oder eine physikalische Wirkung des Verarbeitungsmittels auf das Metallflachprodukt charakterisiert. Somit könnte das Computermodell die Einstellung eines oder mehrerer Geräteparameter des Verarbeitungsmittels (z.B. eine Verarbeitungsgeschwindigkeit, eine Geometrieeinstellung, eine Werkzeugauswahl oder eine geräteseitig aufzubringende Kraft) direkt vorgeben, sodass diese nicht in einem zusätzlichen Arbeitsschritt ermittelt werden müsste(n). Alternativ oder zusätzlich könnte eine physikalische Wirkung des Verarbeitungsmittels auf das Metallflachprodukt definiert werden (z.B. Temperatur, Kraft am Ort des Metallflachprodukts), die beispielsweise mithilfe einer Messvorrichtung überwacht und mittels einer Regelschleife in eine Geräteeinstellung des Verarbeitungsmittels übersetzt werden könnte. Auf diese Weise könnte der benötigte Umfang manueller Bedienoperationen des Verarbeitungsmittels reduziert, die Bearbeitungsdauer des Metallflachprodukts durch das Verarbeitungsmittel verkürzt und / oder die Qualität des gewünschten Metallwerkstücks verbessert werden.

Erfindungsgemäß ist das Metallflachprodukt logisch in eine Vielzahl von Segmenten unterteilt, wobei der technische Datensatz für jedes der Segmente das Segment charakterisierende technische Daten aufweist. Auf diese Weise könnte eine segmentspezifische Auswahl und Verarbeitung des Metallflachprodukts ermöglicht werden. Beispielsweise könnten die Eigenschaften des Metallflachprodukts nicht als jeweils über die gesamte Länge und Breite definierte Mittel- oder Nennwerte, sondern als segmentspezifische Realwerte zur Modellierung herangezogen werden. Dadurch könnte während des Verarbeitungsprozesses, insbesondere bei der Steuerung des Verarbeitungsmittels, besser auf lokale Schwankungen reagiert werden.

Liegt beispielsweise das Metallflachprodukt als Band vor, so weist es eine größere Längserstreckung (Länge) im Vergleich zur Quererstreckung (Breite) auf, wobei insbesondere die Länge in einzelne Abschnitte unterteilt werden kann. Da die physikalischen und / oder materialspezifischen Eigenschaften in Längs- und / oder Quererstreckung des Metallflachprodukts variieren können, könnte die Einteilung in Abschnitte dazu beitragen, dass eine Gliederung in Abschnitte in Längserstreckung (und / oder bei Bedarf in Quererstreckung) aussagekräftiger sind und sich lokale Schwankungen besser identifizieren lassen als ein Mittelwert über die gesamte Länge, welcher lokale Schwankungen nicht berücksichtigt.

Gemäß einer Ausführungsform ist jedes Segment individuell auslegbar, insbesondere in Abhängigkeit des technischen Datensatzes. Vorzugsweise weist jedes Segment in wenigstens einer Richtung eine Ausdehnung von höchstens 5 Metern (m), vorzugsweise höchstens 1 Meter auf. Bei der Richtung könnte es sich beispielsweise um eine Längsrichtung eines Bandes handeln, sodass das Band logisch in kleine Quersegmente unterteilt ist, oder um eine Querrichtung des Bandes, sodass eine logische Unterteilung in mehrere Spaltbänder mit individuellen Eigenschaften vorliegt. Das Metallflachprodukt kann auch mit logischen Maßbegrenzungen in mehr als einer Richtung aufgeteilt werden, beispielsweise als Rasterung von 50 x 50 Zentimetern (cm). Da die materialspezifischen Eigenschaften in Längs- und / oder Querstreckung des Metallflachprodukts variieren können, könnte die Einteilung in Abschnitte dazu beitragen, dass eine feine Gliederung in Abschnitte in Längserstreckung (und / oder bei Bedarf in Quererstreckung) von 1 m und weniger aussagekräftiger sind und sich lokale Schwankungen besser identifizieren lassen als ein Mittelwert über die gesamte Länge, welcher lokale Schwankungen nicht berücksichtigt.

Eine Berücksichtigung von Materialschwankungen mit hoher Auflösung im Verarbeitungsprozess könnte insbesondere bei der Herstellung kleinformatiger Metallwerkstücke eine genauere Sortierung beispielsweise nach Qualität ermöglichen. Ein weiterer Vorteil könnte darin bestehen, dass bei der Fertigung einer Vielzahl von Metallwerkstücken aus demselben Metallflachprodukt eine abschließende Qualitätsprüfung vereinfacht werden könnte, da aufgrund der hohen Auflösung bereits werkstückspezifische Qualitätsinformationen aus der Herstellung des zugrundeliegenden Metallflachprodukts vorliegen.

Gemäß einer Ausführungsform weist der Betriebsparameter eine Spezifikation eines aus den Segmenten für die Herstellung des Metallwerkstücks ausgewählten Segments auf. Durch eine Auswertung des technischen Datensatzes und einen Abgleich mit einer dem Eingang des Computermodells bereitgestellten Spezifikation des gewünschten Metallwerkstücks könnte das Computermodell ein für das individuelle Metallwerkstück am besten geeignetes Segment identifizieren. Dies könnte eine weitere Qualitätsverbesserung ermöglichen und die Qualitätsüberwachung z.B. bei Serienproduktion des Metallwerkstücks vereinfachen.

Gemäß einer Ausführungsform wird das Verarbeitungsmittel aufgrund des technischen Datensatzes und / oder des Modellwertes aus einer Vielzahl von verfügbaren Verarbeitungsmitteln ausgewählt. Beispielsweise könnte die Auswahl unter dem Kriterium einer Optimierung des Verarbeitungsmittels für die individuellen Eigenschaften des Metallflachprodukts oder einer Verringerung des Verschleißes des Verarbeitungsmittels erfolgen. Eine Optimierung könnte zum Beispiel darin bestehen, ein kleineres Verarbeitungsmittel für den Verarbeitungsschritt an einem Metallflachprodukt mit kleineren (z.B. signifikant unterdurchschnittlichen) Gesamtabmessungen auszuwählen, damit eine Verarbeitung größerer Metallflachprodukte auf größeren Maschinen nicht aufgrund einer Auslastung durch Verarbeitung kleinerer Metallflachprodukte verzögert wird. Alternativ ließe sich bei einer großen Zahl zu verarbeitender kleinformatiger Metallflachprodukte die Auslastung der Großformatmaschinen erhöhen, indem sie zwischendurch auch kleinformatige Metallflachprodukte verarbeiten. Das Prinzip lässt sich analog auf andere Eigenschaften von Metallflachprodukten übertragen, z.B. bei der Verwendung einer Umformanlage mit höherer maximaler Biegekraft für überdurchschnittlich dicke Metallflachprodukte oder auch deren Verwendung zum Umformen von Metallflachprodukten geringerer Dicke zur Verbesserung der Auslastung.

Eine Verringerung des Verschleißes der Verarbeitungsmittel ließe sich beispielsweise dadurch erzielen, dass aus einer Vielzahl verschiedener Anlagen, deren identischer Betriebsparameter jeweils innerhalb eines individuell verschiedenen zulässigen Wertebereichs eingestellt werden kann, für das individuell simulierte Metallflachprodukt ein Verarbeitungsmittel ausgewählt wird, für das der Modellwert nicht am z.B. oberen Rand des zulässigen Wertebereichs liegt. Beispielsweise ließe sich eine Umformanlage mit einer mittleren Biegekraft, Prozesstemperatur usw. verschleißärmer betreiben als mit einer hohen Biegekraft, Prozesstemperatur usw. Alternativ könnte ein Betrieb am z.B. unteren Rand eines zulässigen Wertebereichs für den Betriebsparameter qualitative Nachteile für das gewünschte Metallwerkstück zur Folge haben. So könnte etwa eine Biegevorrichtung für Grobbleche zur Umformung eines unterdurchschnittlich dünnen Metallflachprodukts eine besonders niedrige Umbiegekraft benötigen, die sich nur mit einer vergleichsweise großen relativen Unsicherheit einstellen ließe. Dies könnte bei wiederholtem derartigem Einsatz zu einem erhöhten Aufkommen von Schwankungen in der Geometrie von daraus resultierenden Metallwerkstücken führen.

Gemäß einer Ausführungsform wird die Herstellung des gewünschten Metallwerkstücks unterdrückt, falls der Modellwert außerhalb eines vorgegebenen Wertebereichs liegt oder falls auf Basis des Modellwertes und / oder des technischen Datensatzes eine Warnung über eine Verletzung eines vorgegebenen Qualitätskriteriums im Fall einer hypothetischen Herstellung des Metallwerkstücks aus dem Metallflachprodukt empfangen wird. Eine Vorgabe für einen Wertebereich des Modellwerts könnte sich beispielsweise aus einem oder mehreren zulässigen oder realisierbaren Wertebereichen des entsprechenden Betriebsparameters ergeben, der mit den zur Verfügung stehenden Verarbeitungsmitteln eingestellt werden kann, entweder direkt als an der jeweiligen Maschine einzustellender Parameter oder indirekt als physikalische Wirkung der Maschine auf das Metallflachprodukt.

Eine entsprechende Qualitätswarnung könnte beispielsweise von dem Computermodell aufgrund dessen Auswertung des technischen Datensatzes, von einer Analysesoftware aufgrund eines Empfangs eines Simulationsergebnisses von der Ausgabe des Computermodells, oder von einem der an der Verarbeitung beteiligten Verarbeitungsmittel empfangen werden und optional als Meldung oder Hinweis an einem Ausgabegerät (z.B. Bildschirm, Lautsprecher) ausgegeben werden. Eine Verletzung eines Qualitätskriteriums könnte insbesondere in einer fehlgeschlagenen Plausibilisierung von Daten des technischen Datensatzes bestehen. Auf diese Weise ließe sich beispielsweise eine Verwechslung des Metallflachprodukts erkennen und eine Durchführung des Verarbeitungsprozesses mit dem verwechselten Metallflachprodukt verhindern.

Eine Unterdrückung der Herstellung ist dabei so zu verstehen, dass der Verarbeitungsprozess (also kein Verarbeitungsschritt des Verarbeitungsprozesses) nicht begonnen wird, falls eine Qualitätswarnung oder Wertebereichsüberschreitung vorliegt. Ein Unterdrücken des Verarbeitungsprozesses bei Wertebereichsüberschreitung könnte beispielsweise eine Überlastung des für die Einstellung des Modellwerts vorgesehenen Verarbeitungsmittels verhindern. Eine Unterdrückung des Verarbeitungsprozesses bei Vorliegen einer Qualitätswarnung wiederum könnte eine konstantere Qualität bei Herstellung mehrerer Metallwerkstücke mit demselben Verarbeitungsprozess oder die Einhaltung eines Mindestqualitätsniveaus für das gewünschte Metallwerkstück bewirken.

Als Reaktion auf einen unterdrückten Verarbeitungsprozess könnte das Computermodell mit dem technischen Datensatz eines anderen, besser geeigneten Metallflachprodukts ausgeführt werden und anschließende das gewünschten Metallwerkstück aus dem besser geeigneten Metallflachprodukt hergestellt werden. Alternativ könnte der betreffende Betriebsparameter z.B. manuell oder aufgrund einer alternativen automatischen Bestimmungsmethode (z.B. Regelelektronik) in einem passenden Wertebereich gesetzt werden. Alternativ ließe sich der unterdrückte Verarbeitungsprozess mit einem anderen Verarbeitungsmittel durchführen, für das der Wertebereich nicht überschritten oder das Qualitätskriterium nicht verletzt wird, oder indem, falls möglich, der verletzende Teilschritt auf einem anderen Verarbeitungsmittel durchgeführt wird, bei dem die Überschreitung oder Verletzung nicht auftritt.

Gemäß einer Ausführungsform weist das Metallflachprodukt eine Blechtafel, ein Band oder ein Spaltband auf. Für diese gängigen Formate von Metallflachprodukten könnte sich das Verfahren zur Herstellung eines gewünschten Metallwerkstücks aus einem Metallflachprodukt im Fall einer bestehenden industriellen Infrastruktur aus Verarbeitungs- und Transportmitteln besonders barrierearm implementieren lassen.

Gemäß einer Ausführungsform weist das Verfahren zur Herstellung eines gewünschten Metallwerkstücks aus einem Metallflachprodukt zusätzlich auf:
- Für jedes aus einer Vielzahl von verfügbaren Metallflachprodukten, Empfangen des das verfügbare Metallflachprodukt jeweilig charakterisierenden technischen Datensatzes, wobei zumindest ein Teil der Daten des technischen Datensatzes während der Herstellung des verfügbaren Metallflachprodukts erfasst wurde,
- Auswählen des Metallflachprodukts auf Basis der technischen Datensätze, wobei das ausgewählte Metallflachprodukt das Metallflachprodukt ist, welches für die Durchführung des Verfahrens zur Herstellung des gewünschten Metallwerkstücks verwendet wird.

Auf diese Weise könnte ein für die Herstellung des Metallwerkstücks zu verwendendes Metallflachprodukt optimiert ausgewählt werden und somit eine Qualitätsverbesserung des Metallwerkstücks und / oder eine verschleißärmere Verwendung des Verarbeitungsmittels erzielt werden.

Gemäß einer Ausführungsform weist das Auswählen auf:
- Empfangen eines das gewünschte Metallwerkstück charakterisierenden Spezifikationsdatensatzes,
- Für zumindest einen Teil der technischen Datensätze, Berechnen einer Abweichungsmetrik des technischen Datensatzes von dem Spezifikationsdatensatz,
- Identifizieren des Metallflachprodukts, für welches die Abweichungsmetrik minimiert ist.

Dies könnte den Vorteil einer qualitätsoptimierten Auswahl des Metallflachprodukts durch größtmögliche Übereinstimmung mit der Spezifikation des Metallwerkstücks bieten. In einem nicht beschränkenden Beispiel könnte der Spezifikationsdatensatz dabei einen oder mehrere Datenschlüssel aufweisen, die auch in dem technischen Datensatz enthalten sind, und für jeden dieser Datenschlüssel einen Wert oder Wertebereich vorgeben (Schlüssel-Werte-Datensatz). Die Spezifikation könnte zudem einen oder mehrere der enthaltenen Datenschlüssel angeben, die zur Berechnung der Abweichungsmetrik verwendet werden sollen. Die Abweichungsmetrik könnte dann für übereinstimmende numerische Datenschlüssel (z.B. geometrische Abmessungen, Steifigkeit) die Differenz zwischen dem Wert der Spezifikation und dem Wert des technischen Datensatzes berechnen. Für nicht-numerische Datenschlüssel (z.B. Bezeichnung des Walzverfahrens) könnte dann eine Quantifizierung erforderlich sein, z.B. als Faktor ,1' bei Übereinstimmung und Faktor ,0' bei fehlender Übereinstimmung, analog als Nullsummand bei fehlender Übereinstimmung und normierter Einssummand bei Übereinstimmung, oder anhand einer Tabelle, die z.B. verschiedene Walzverfahren nach ihrer Ähnlichkeit quantifiziert. Bei der Verwendung mehrerer Datenschlüssel zur Bestimmung der Nähe zur Spezifikation des Metallwerkstücks könnte die Abweichungsmetrik die einzelnen Übereinstimmungen aggregieren, beispielsweise als mathematische Funktion (z.B. als Summe der Differenzbeträge oder Differenzquadrate oder als gewichtete Summe mit fest vorgegebenen oder in dem Spezifikationsdatensatz angegebenen Gewichten).

Gemäß einer Ausführungsform weist das Auswählen auf:
- Für jeden von zumindest einem Teil der technischen Datensätze:
   - Übergeben des technischen Datensatzes an den Eingang des Computermodells,
   - Aufgrund der Übergabe des technischen Datensatzes, Empfangen eines Modellwertes für den Betriebsparameter vom Ausgang des Computermodells,
   - Vergleichen des Modellwertes mit einem vorgegebenen Optimalwert des Betriebsparameters,
- Identifizieren des Metallflachprodukts, für welches die Differenz zum Optimalwert minimiert ist.

Dies könnte den Vorteil einer Auswahl des Metallflachprodukts bieten, die das Verschleißrisiko des Verarbeitungsmittels durch die beste Übereinstimmung mit dem Optimalwert minimiert und / oder eine gleichbleibendere Qualität des Metallwerkstücks ermöglicht. Eine Verringerung des Verschleißes ließe sich beispielsweise dadurch erzielen, dass der Optimalwert in einem mittleren Wertebereich innerhalb eines durch Konstruktionsgrenzen des Verarbeitungsmittels vorgegebenen zulässigen Wertebereichs liegt, der von dem Maximal- und Minimalwert des Betriebsparameters durch einen oberen bzw. unteren Wertebereich beabstandet ist. Liefert nun das Computermodell für eine Vielzahl verschiedener Metallflachprodukte unterschiedliche, um den Optimalwert streuende Modellwerte, so können durch größtmögliche Nähe zum Optimalwert der obere und der untere Wertebereich vermieden werden.

Beispielsweise ließe sich eine Umformanlage mit einer mittleren Biegekraft, Prozesstemperatur usw. verschleißärmer betreiben als mit einer hohen Biegekraft, Prozesstemperatur usw. Alternativ könnte ein Betrieb im z.B. unteren Wertebereich für den Betriebsparameter qualitative Nachteile für das gewünschte Metallwerkstück zur Folge haben. So könnte etwa eine Biegevorrichtung für Grobbleche zur Umformung eines unterdurchschnittlich dünnen Metallflachprodukts eine besonders niedrige Umbiegekraft benötigen, die sich nur mit einer vergleichsweise großen relativen Unsicherheit einstellen ließe. Dies könnte bei wiederholtem derartigem Einsatz zu einem erhöhten Aufkommen von Schwankungen in der Geometrie von daraus resultierenden Metallwerkstücken führen.

Gemäß einer Ausführungsform weist das Verfahren zur Herstellung eines gewünschten Metallwerkstücks aus einem Metallflachprodukt zusätzlich auf:
- Vergleichen des Modellwertes mit einem Vergleichswert des Betriebsparameters, wobei der Vergleichswert eine hypothetische Verwendung des Verarbeitungsmittels zur Durchführung eines weiteren Verarbeitungsschritts an einem weiteren Metallflachprodukt charakterisiert,
- Falls der Betrag der Differenz zwischen dem Modellwert und dem Vergleichswert einen vorgegebenen Grenzwert unterschreitet, zeitliches Gruppieren des Verarbeitungsschritts mit dem weiteren Verarbeitungsschritt.

Dies könnte den Vorteil bieten, dass verschiedene Verarbeitungsschritte desselben Verarbeitungsmittels an verschiedenen Metallflachprodukten (wobei es sich auch um verschiedene Schnittstücke desselben ursprünglichen Metallflachprodukts im Ausgangszustand handeln kann), die ähnliche Werte des Betriebsparameters erfordern, hintereinander durchgeführt werden. Unter einer zeitlichen Gruppierung ist dabei zu verstehen, dass zwischen zwei in derselben Gruppe gruppierten Verarbeitungsschritten kein Verarbeitungsschritt liegt, für den der Modellwert vom Vergleichswert um mindestens den Grenzwert abweicht. Folglich entspricht der zeitlichen Gruppierung der verschiedenen Verarbeitungsschritte eine Gruppierung der Modellwerte innerhalb eines Intervalls von der Breite des zweifachen Grenzwerts um den Vergleichswert. Die Festlegung des Vergleichswertes kann dabei beispielsweise durch statistische Identifikation eines Häufungspunkts (z.B. Median / Perzentilanalyse) ermittelt werden.

In einem weiteren Aspekt stellt die Erfindung eine Vorrichtung zur Steuerung der Herstellung eines gewünschten Metallwerkstücks aus einem Metallflachprodukt bereit, wobei die Vorrichtung einen ersten Prozessor und einen ersten Speicher mit Programminstruktionen aufweist, wobei die Ausführung der Programminstruktionen die Vorrichtung zur Steuerung der Herstellung eines gewünschten Metallwerkstücks aus einem Metallflachprodukt veranlasst zum:
- Bereitstellen eines Computermodells für eine Herstellung des gewünschten Metallwerkstücks aus dem Metallflachprodukt in einem Verarbeitungsprozess, wobei das Computermodell einen Eingang und einen Ausgang aufweist, wobei der Verarbeitungsprozess einen Verarbeitungsschritt an dem Metallflachprodukt durch ein Verarbeitungsmittel aufweist,
- Empfangen eines das Metallflachprodukt charakterisierenden technischen Datensatzes, wobei zumindest ein Teil der Daten des technischen Datensatzes während der Herstellung des Metallflachprodukts erfasst wurde,
- Übergeben des technischen Datensatzes an den Eingang des Computermodells,
- Aufgrund der Übergabe des technischen Datensatzes, Empfangen eines Modellwertes für einen Betriebsparameter des Verarbeitungsmittels vom Ausgang des Computermodells,
- Herstellen des gewünschten Metallwerkstücks durch Steuern des Verarbeitungsprozesses, wobei die Steuerung des Verarbeitungsprozesses ein Steuern des Verarbeitungsmittels zum Durchführen des Verarbeitungsschritts an dem Metallflachprodukt mit dem auf den Modellwert gesetzten Betriebsparameter aufweist,
wobei das Metallflachprodukt logisch in eine Vielzahl von Segmenten unterteilt ist, wobei der technische Datensatz für jedes der Segmente das Segment charakterisierende technische Daten aufweist.

In einem weiteren Aspekt stellt die Erfindung ein computerimplementiertes Verfahren zur Steuerung einer Produktionsanlage eines metallverarbeitenden Betriebs, beispielsweise eines Press- oder Walzwerks, bereit, wobei das Verfahren aufweist:
- Steuern der Produktionsanlage zur Herstellung eines Metallflachprodukts,
- Während der Herstellung des Metallflachprodukts, Erfassen eines das Metallflachprodukt charakterisierenden technischen Datensatzes,
- Übermitteln des technischen Datensatzes an eine Produktionsanlage eines Verarbeitungswerks zur Steuerung einer Verarbeitung des Metallflachprodukts in einem von der Produktionsanlage implementierten Verarbeitungsprozess auf Basis des technischen Datensatzes,
wobei das Metallflachprodukt logisch in eine Vielzahl von Segmenten unterteilt ist, wobei der technische Datensatz für jedes der Segmente das Segment charakterisierende technische Daten aufweist.

Dieses zum Verfahren zur Herstellung eines gewünschten Metallwerkstücks aus einem Metallflachprodukt komplementäre Verfahren könnte eine bedarfsgerechte Bereitstellung des technischen Datensatzes an das Verarbeitungswerk zeitlich versetzt oder zusammen mit dem Metallflachprodukt bewirken, sodass dieser an den Eingang des Computermodells übergeben und ein daraus abgeleiteter Modellwert für einen Betriebsparameter bei der Produktion des Metallwerkstücks eingestellt werden könnte.

Gemäß einer Ausführungsform weist das Verfahren zur Steuerung einer Produktionsanlage eines metallverarbeitenden Betriebs zusätzlich ein Empfangen eines den Verarbeitungsprozess auf Basis des technischen Datensatzes charakterisierenden Verarbeitungsdatensatzes sowie ein Anpassen der Steuerung der Produktionsanlage auf Basis des Verarbeitungsdatensatzes auf. Der auf diese Weise eingerichtete Datenrückfluss vom Verarbeitungswerk zum metallverarbeitenden Betrieb könnte es dem metallverarbeitenden Betrieb ermöglichen, Prozessparameter bei der zukünftigen Herstellung weiterer Metallflachprodukte so anzupassen, dass bestimmte Eigenschaften der zukünftigen Metallflachprodukte für einen oder mehrere der Verarbeitungsschritte optimiert sind. Beispielsweise ließen sich auf diese Weise systematische Abweichungen der Geometrie der Kanten des Metallflachprodukts von einem bekannten Bedarf des Verarbeitungswerks für einen Fügeprozess erkennen und seitens des metallverarbeitenden Betriebs reduzieren oder eliminieren, sodass in dem Beispiel ein zusätzlicher Verarbeitungsschritt zur Korrektur der systematischen Formabweichungen (z.B. Besäumung) weniger aufwändig werden oder sogar entfallen könnte.

Gemäß einer Ausführungsform weist das Verfahren zur Steuerung einer Produktionsanlage eines metallverarbeitenden Betriebs zusätzlich ein Empfangen einer Vielzahl von weiteren Verarbeitungsdatensätzen, ein Speichern des Verarbeitungsdatensatzes zusammen mit den weiteren Verarbeitungsdatensätzen sowie ein Bereitstellen der gespeicherten Verarbeitungsdatensätze an einen Eingang einer Mustererkennung auf, wobei die Anpassung der Steuerung der Produktionsanlage auf Basis eines von einem Ausgang der Mustererkennung empfangenen erkannten Musters erfolgt.

Eine ein bekanntes Verfahren implementierende Mustererkennung z.B. auf Basis einer Support Vector Machine, eines künstlichen neuronalen Netzes oder eines lernfähigen Algorithmus könnte die Ermittlung von Häufungswerten, systematischen und / oder sporadischen Abweichungen und / oder nur auf Basis einer großen Datenmenge erkennbaren Zusammenhängen in den Verarbeitungsdatensätzen erleichtern. Beispielsweise könnte der Einfluss der Materialzusammensetzung, Kantengeometrie und / oder Oberflächenbeschaffenheit von diversen Metallflachprodukten auf ihre Schweißbarkeit untersucht werden und ein erkannter Zusammenhang bei der Materialzusammensetzung in zukünftigen Schmelz- und Gießprozessen, für die Kantengeometrie in zukünftigen Spalt- oder Besäumungsprozessen und / oder für die Oberflächenbeschaffenheit in zukünftigen Walz- und / oder Dressierprozessen auf eine Optimierung des Schweißverhaltens hin berücksichtigt werden.

In einem weiteren Aspekt stellt die Erfindung eine Vorrichtung zur Steuerung einer Produktionsanlage eines metallverarbeitenden Betriebs bereit, wobei die Vorrichtung einen zweiten Prozessor und einen zweiten Speicher mit Programminstruktionen aufweist, wobei die Ausführung der Programminstruktionen die Vorrichtung zur Steuerung einer Produktionsanlage eines metallverarbeitenden Betriebs veranlasst zum:
- Steuern der Produktionsanlage zur Herstellung eines Metallflachprodukts,
- Während der Herstellung des Metallflachprodukts, Erfassen eines das Metallflachprodukt charakterisierenden technischen Datensatzes,
- Übermitteln des technischen Datensatzes an eine Produktionsanlage eines Verarbeitungswerks zur Steuerung einer Verarbeitung des Metallflachprodukts in einem Verarbeitungsprozess auf Basis des technischen Datensatzes,
wobei das Metallflachprodukt logisch in eine Vielzahl von Segmenten unterteilt ist, wobei der technische Datensatz für jedes der Segmente das Segment charakterisierende technische Daten aufweist.

In einem weiteren Aspekt stellt die Erfindung ein Computerprogrammprodukt mit von einem Prozessor ausführbaren Instruktionen zur Durchführung des Verfahrens nach einer der der hierin beschriebenen Ausführungsformen bereit.

Die obig beschriebenen Ausführungsformen können, im Rahmen des durch die Ansprüche definierten Schutzumfanges, in beliebiger Weise miteinander kombiniert werden, sofern sich diese Kombinationen gegenseitig nicht ausschließen.

Der Fachmann wird verstehen, dass Aspekte der vorliegenden Erfindung als Gerät, Verfahren oder Computerprogrammprodukt ausgeführt sein können. Entsprechend können Aspekte der vorliegenden Erfindung die Form einer reinen Hardware-Ausführungsform, einer reinen Software-Ausführungsform (darunter Firmware, im Speicher befindliche Software, Mikro-Code, usw.) oder einer Software- und Hardware-Aspekte kombinierenden Ausführungsform annehmen, die hierin alle allgemein als "Schaltkreis", "Modul" oder "System" bezeichnet sein können. Des Weiteren können Aspekte der vorliegenden Erfindung die Form eines Computerprogrammprodukts annehmen, welches durch ein computerlesbares Medium oder durch mehrere computerlesbare Medien in Form von computerausführbarem Code getragen wird.

Eine beliebige Kombination von einem oder mehreren computerlesbaren Medium (en) kann verwendet werden. Das computerlesbare Medium kann ein computerlesbares Signalmedium oder ein computerlesbares Speichermedium sein. Ein "computerlesbares Speichermedium", wie hierin verwendet, umfasst ein materielles Speichermedium, das Anweisungen speichern kann, die durch einen Prozessor einer Computervorrichtung ausführbar sind. Das computerlesbare Speichermedium kann als computerlesbares nicht-flüchtiges Speichermedium bezeichnet werden. Das computerlesbare Speichermedium kann auch als ein greifbares computerlesbares Medium bezeichnet werden. In einigen Ausführungsformen kann ein computerlesbares Speichermedium auch in der Lage sein Daten zu speichern, die es ermöglichen, dass durch den Prozessor der Rechnervorrichtung auf sie zugegriffen wird. Beispiele von computerlesbaren Speichermedien umfassen, sind aber nicht beschränkt auf: eine Diskette, eine magnetische Festplatte, eine Festkörper-Festplatte, Flash-Speicher, einen USB-Stick, Random Access Memory (RAM), Festwertspeicher (ROM), eine optische Platte, eine magnetooptische Platte, und die Registerdatei des Prozessors. Beispiele für optische Platten umfassen Compact Disks (CD) und Digital Versatile Disks (DVD), zum Beispiel CD-ROM, CD-RW, CD-R, DVD-ROM, DVD-RW oder DVD-R-Disks. Der Begriff computerlesbares Speichermedium bezieht sich auch auf verschiedene Arten von Aufzeichnungsmedien, die dafür geeignet sind von der Rechnervorrichtung über ein Netzwerk oder eine Kommunikationsverbindung abgerufen zu werden. Zum Beispiel können Daten über ein Modem, über das Internet oder über ein lokales Netzwerk abgerufen werden. Computerausführbarer Code, der auf einem computerlesbaren Medium ausgeführt wird, kann über jedes geeignete Medium übermittelt werden, einschließlich, aber nicht darauf beschränkt, drahtlose, drahtgebundene, Lichtwellenleiter, RF, etc., oder jede geeignete Kombination der vorstehenden Medien.

Ein computerlesbares Signalmedium kann ein ausgebreitetes Datensignal beinhalten, das den computerlesbaren Programmcode zum Beispiel in einem Basissignal (baseband) oder als Teil eines Trägersignals (Trägerwelle) enthält. Solch ein Ausbreitungssignal kann in einer beliebigen Form ausgebildet sein, darunter, jedoch nicht beschränkt auf, eine elektromagnetische Form, eine optische Form oder jede geeignete Kombination davon. Bei einem computerlesbaren Signalmedium kann es sich um ein beliebiges computerlesbares Medium handeln, das kein computerlesbares Speichermedium ist und das ein Programm zur Verwendung durch oder in Verbindung mit einem System, Gerät oder Vorrichtung zur Ausführung von Anweisungen übertragen, verbreiten oder transportieren kann.

"Computer-Speicher" oder "Speicher" ist ein Beispiel für ein computerlesbares Speichermedium. Ein Computer-Speicher ist jeder Speicher, der einem Prozessor direkt zugänglich ist.

"Computer-Datenspeicher" oder "Datenspeicher" ist ein weiteres Beispiel eines computerlesbaren Speichermediums. Computer-Datenspeicher ist jedes nichtflüchtige computerlesbare Speichermedium. In einigen Ausführungsformen kann ein Computerspeicher auch ein Computer-Datenspeicher sein oder umgekehrt.

Ein "Prozessor", wie er hierin verwendet wird, umfasst eine elektronische Komponente, die in der Lage ist, eine programm- oder maschinenausführbare Anweisung oder computerausführbaren Code auszuführen. Eine Bezugnahme auf die Rechnervorrichtung, die einen "Prozessor" umfasst, sollte so interpretiert werden, dass sie möglicherweise mehr als einen Prozessor oder Verarbeitungskerne umfasst. Der Prozessor kann zum Beispiel ein Multi-Core-Prozessor sein. Ein Prozessor kann sich auch auf eine Sammlung von Prozessoren innerhalb eines einzigen Computersystems oder verteilt auf mehrere Computersysteme beziehen. Der Begriff Rechnervorrichtung oder des Computers soll auch so interpretiert werden, um möglicherweise auf eine Sammlung oder ein Netzwerk von Rechnervorrichtungen oder Computern, die jeweils einen Prozessor oder Prozessoren umfassen, hinzuweisen. Der computerausführbare Code kann durch mehrere Prozessoren ausgeführt werden, die innerhalb derselben Rechnervorrichtung oder sogar über mehrere Computer verteilt sein können.

Computerausführbarer Code kann maschinenausführbare Anweisungen oder ein Programm umfassen, das einen Prozessor veranlasst, einen Aspekt der vorliegenden Erfindung durchzuführen. Computerausführbarer Code zum Ausführen von Operationen für Aspekte der vorliegenden Erfindung kann in jeder beliebigen Kombination einer oder mehrerer Programmiersprachen geschrieben sein, darunter eine objektorientierte Programmiersprache wie Java, Smalltalk, C++ oder Ähnliche und herkömmliche verfahrensorientierte Programmiersprachen wie die Programmiersprache "C" oder ähnliche Programmiersprachen, und in maschinenausführbare Anweisungen übersetzt werden. In einigen Fällen kann der computerausführbare Code in der Form einer höheren Programmiersprache oder in einer vor-übersetzten Form vorliegen, und in Verbindung mit einem Interpreter verwendet werden, der die maschinenausführbaren Anweisungen generiert.

Der computerausführbare Code kann vollständig auf dem Rechner eines Benutzers, teilweise auf dem Rechner des Benutzers, als eigenständiges Software-Paket, teilweise auf dem Rechner des Benutzers und teilweise auf einem entfernt angeordneten Rechner oder vollständig auf dem entfernt angeordneten Rechner oder Server ausgeführt werden. In letzterem Fall kann der entfernt angeordnete Rechner mit dem Rechner des Benutzers durch eine beliebige Art von Netzwerk verbunden sein, einschließlich einem lokalen Netzwerk (LAN) oder einem Weitverkehrsnetz (WAN), oder die Verbindung kann mit einem externen Rechner hergestellt werden (zum Beispiel über das Internet unter Verwendung eines Internet-Dienstanbieters).

Aspekte der vorliegenden Erfindung werden unter Bezugnahme auf Flussdiagramm-Darstellungen und/oder Blockschaltbilder von Verfahren, Vorrichtungen (Systemen) und Computerprogramm-produkten gemäß Ausführungsformen der Erfindung beschrieben. Es wird darauf hingewiesen, dass jeder Block oder Teile der Blöcke der Flussdiagramme, Darstellungen und/oder der Blockschaltbilder durch Computerprogrammanweisungen, gegebenenfalls in Form eines computerausführbaren Codes, ausgeführt werden können. Es wird weiter darauf hingewiesen, dass Kombinationen von Blöcken in verschiedenen Flussdiagrammen, Darstellungen und/oder Blockschaltbildern kombiniert werden können, wenn sie sich nicht gegenseitig ausschließen. Diese Computerprogrammanweisungen können einem Prozessor eines Universalrechners, Spezialrechners oder einer anderen programmierbaren Datenverarbeitungsvorrichtung bereitgestellt werden, um eine Vorrichtung zu erzeugen, so dass die über den Prozessor des Computers oder der anderen programmierbaren Datenverarbeitungsvorrichtung ausgeführten Anweisungen Mittel zur Ausführung der in dem Block oder den Blöcken der Flussdiagramme und/oder der Blockschaltbilder festgelegten Funktionen/Schritte erzeugen.

Diese Computerprogrammanweisungen können auch auf einem computerlesbaren Medium gespeichert sein, die einen Computer oder andere programmierbare Datenverarbeitungsvorrichtungen oder andere Vorrichtungen steuern können, dass sie auf eine bestimmte Art funktionieren, so dass die auf dem computerlesbaren Medium gespeicherten Anweisungen ein Herstellungserzeugnis hervorrufen, einschließlich Anweisungen, welche die/den in dem Block oder den Blöcken der Flussdiagramme und/oder der Blockschaltbilder festgelegte/n Funktion/Schritt umsetzen.

Die Computerprogrammanweisungen können auch auf einen Computer, anderen programmierbaren Datenverarbeitungsvorrichtungen oder anderen Vorrichtungen gespeichert werden, um die Ausführung einer Reihe von Prozessschritten auf dem Computer, anderen programmierbaren Datenverarbeitungsvorrichtungen oder anderen Vorrichtungen zu verursachen, um einen auf einem Computer ausgeführten Prozess zu erzeugen, so dass die auf dem Computer oder den anderen programmierbaren Vorrichtungen ausgeführten Anweisungen Verfahren zur Umsetzung der in dem Block oder den Blöcken der Flussdiagramme und/oder der Blockschaltbilder festgelegten Funktionen/Schritte erzeugen.

Im Folgenden werden konkrete Ausgestaltungen der Erfindung mit Bezugnahme auf die Zeichnungen im Detail näher erläutert. Die Zeichnung und begleitende Beschreibung der resultierenden Merkmale sind nicht beschränkend auf die jeweiligen Ausgestaltungen zu lesen, sondern dienen ausschließlich der Illustration einer oder mehrerer beispielhafter Ausgestaltungen. Weiterhin können die jeweiligen Merkmale untereinander wie auch mit sonstigen hierin offenbarten Merkmalen kombiniert werden, ohne den Geist und Umfang der Erfindung zu überschreiten, auch wenn solche Kombinationen nicht ausdrücklich dargestellt oder erwähnt sind.

Die Zeichnungen zeigen in
- Figur 1: eine schematische Darstellung einer Umgebung, in der das Verfahren zur Herstellung eines gewünschten Metallwerkstücks aus einem Metallflachprodukt und das Verfahren zur Steuerung einer Produktionsanlage eines metallverarbeitenden Betriebs implementiert werden können;
- Figur 2: ein Flussdiagramm zur Veranschaulichung des Verfahrens zur Herstellung eines gewünschten Metallwerkstücks aus einem Metallflachprodukt; und
- Figur 3: ein Flussdiagramm zur Veranschaulichung des Verfahrens zur Steuerung einer Produktionsanlage eines metallverarbeitenden Betriebs.

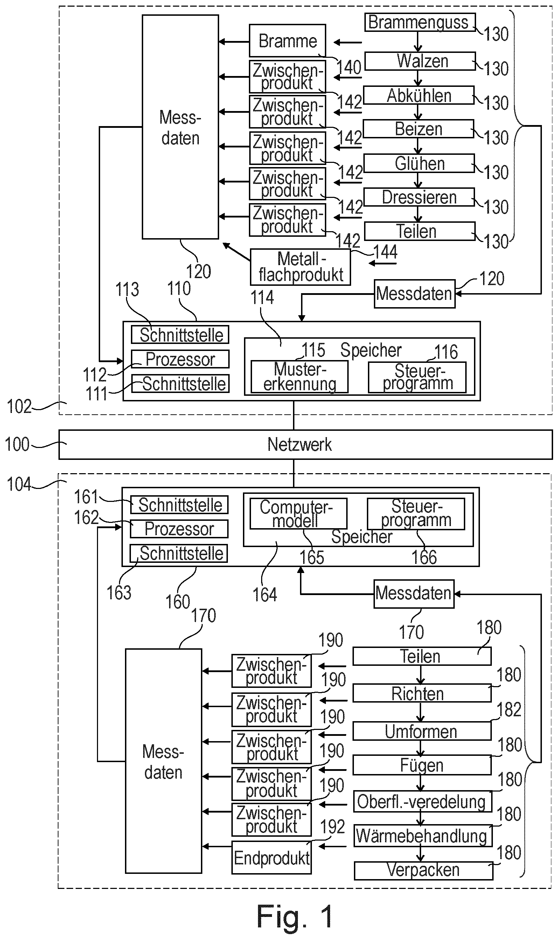

Fig. 1 zeigt ein Organisationsdiagramm eines Verarbeitungswerks 104, das mit einem metallverarbeitenden Betrieb 102 (beispielsweise einem Press- oder Walzwerk) über ein Kommunikationsnetzwerk 100 (z.B. ein internes Netzwerk oder ein IP-Netzwerk, insbesondere das Internet) verbunden ist. Eine Steuerungsvorrichtung 110 des metallverarbeitenden Betriebs 102 verfügt z.B. über eine Schnittstelle 111 zum Netzwerk 100 und z.B. eine Steuerungsvorrichtung 160 des Verarbeitungswerks 104 verfügt über eine Schnittstelle 161 zum Netzwerk 100. Die Steuerungsvorrichtungen 110, 160 werden hierin auch als Steuersysteme 110, 160 bezeichnet.

Der metallverarbeitenden Betrieb 102 verwendet das Steuersystem 110 zur Steuerung der Herstellung von Metallflachprodukten in einer Anzahl von Herstellungsschritten 130. Das digital arbeitende, programmierbare Steuersystem 110 weist neben der Netzwerkschnittstelle 111 noch einen Prozessor 112, eine Steuerschnittstelle 113 und einen Speicher 114 auf. Der Speicher 114 beinhaltet Programmbefehle 115 zur Durchführung z.B. einer Mustererkennung sowie z.B. Programmbefehle 116 zur Steuerung von nicht dargestellten Produktionsanlagen, welche die Herstellungsschritte 130 implementieren. Die Steuerung der Produktionsanlagen erfolgt z.B. über die Steuerschnittstelle 113 (z.B. ein Bussystem oder ein digitales Steuernetzwerk).

Die Zeichnung zeigt die von dem Steuersystem 110 gesteuerten Herstellungsschritte Brammenguss 130, gefolgt von Walzen 130, gefolgt von Abkühlen 130, gefolgt von Beizen 130, gefolgt von Glühen 130, gefolgt von Dressieren 130, gefolgt von Teilen 130. Die Schritte müssen nicht alle durchgeführt werden und sind lediglich beispielhaft zu verstehen. Der Brammenguss 130 überführt eine Metallschmelze in ein Halbzeug 140, beispielsweise eine Bramme 140. Die Herstellungsschritte Abkühlen 130, Beizen 130, Glühen 130 und Dressieren 130 überführen die Bramme nacheinander in eine Reihe von Zwischenprodukten 142. Der letzte Schritt Teilen 130 überführt das letzte Zwischenprodukt 142 in ein Band, welches erfindungsgemäß nach einem nicht dargestellten Haspeln in dem Metallflachprodukt 144, z.B. einem Coil resultiert.

Während der Herstellung des Metallflachprodukts 144 stehen diverse technische Informationen zur Verfügung, die als technische Daten 120 durch Protokollierung von z.B. gemessenen oder vorgegebenen Parametern der Produktionsanlagen und / oder Messung von an der Bramme 140, den Zwischenprodukten 142 und / oder dem Metallflachprodukt 144 beobachtbaren Messgrößen erfasst werden. Die erfassten technischen Daten 120 werden z.B. über die Steuerschnittstelle 113 an die Steuerungsvorrichtung 110 übertragen und dort optional mit zusätzlichen technischen Daten 120 wie beispielsweise einem Zeitstempel und / oder Kennungen der an der Herstellung des Metallflachprodukts 144 beteiligten Produktionsanlagen ergänzt. Die so im Speicher 114 des Steuersystems 110 aggregierten technischen Daten 120 bilden zumindest einen Teil eines technischen Datensatzes 120.

Das Netzwerk 100 und die Schnittstellen 111, 161 sind so konfiguriert, dass zumindest ein Empfang des technischen Datensatzes 120 durch das Steuersystem 160 von dem Steuersystem 110 möglich ist. Der technische Datensatz 120 kann z.B. ab dem Zeitpunkt seiner Zusammenstellung von dem Steuersystem 110 des metallverarbeitenden Betriebs 102 über das Netzwerk 100 an das Steuersystem 160 des Verarbeitungswerks 104 übertragen werden bzw. durch das Steuersystem 160 des Verarbeitungswerks 104 von dem Steuersystem 110 des metallverarbeitenden Betriebs 102 abgefragt werden.

Das Verarbeitungswerk 104 verwendet daraufhin das Steuersystem 160 zur Steuerung der Verarbeitung des Metallflachprodukts 144 in z.B. einer Anzahl von Verarbeitungsschritten 180. Das digital arbeitende, programmierbare Steuersystem 160 weist neben der Netzwerkschnittstelle 161 z.B. noch einen Prozessor 162, eine Steuerschnittstelle 163 und einen Speicher 164 auf. Der Speicher 164 beinhaltet z.B. Programmbefehle 165 zur Ausführung eines Computermodells sowie Programmbefehle 166 zur Steuerung von nicht dargestellten Verarbeitungsanlagen (hierin auch als Verarbeitungsmittel bezeichnet), welche die Verarbeitungsschritte 180 implementieren. Die Steuerung der Verarbeitungsanlagen erfolgt z.B. über die Steuerschnittstelle 163 (z.B. ein Bussystem oder ein digitales Steuernetzwerk).

Die Zeichnung zeigt beispielhaft die von dem Steuersystem 110 gesteuerten Verarbeitungsschritte Teilen 180, gefolgt von Richten 180, gefolgt von Umformen 182, gefolgt von Fügen 180, gefolgt von einer Oberflächenveredelung 180, gefolgt von einer Wärmebehandlung 180, gefolgt von Verpacken 180. Die Schritte müssen nicht alle durchgeführt werden und sind lediglich beispielhaft zu verstehen. Die Verarbeitungsschritte Teilen 180, Richten 180, Umformen 182, Fügen 180 und Oberflächenveredelung 180 überführen das Metallflachprodukt 144, z.B. den Coil, nacheinander in eine Reihe von Zwischenprodukten 190. Der vorletzte Schritt Wärmebehandlung 180 überführt das letzte Zwischenprodukt 190 in das gewünschte Metallwerkstück 192.

Vor der Durchführung der Verarbeitungsschritte 180, 182 zur Herstellung des Metallwerkstücks 192 aus dem Metallflachprodukt 144 führt das Steuersystem 160 des Verarbeitungswerks 104 z.B. das Computermodell 165 aus und übergibt dabei den empfangenen technischen Datensatz 120 oder einen als relevant erachteten Teil davon an einen Eingang des Computermodells 165. Das Computermodell 165 simuliert z.B. den Verarbeitungsprozess 180 des Metallflachprodukts 144 numerisch und / oder analytisch anhand eines implementierten mathematischen Modells. Als Ausgabe stellt das Computermodell 165 dem Steuersystem 160 einen aus dem an seinem Eingang empfangenen technischen Datensatz 120 bestimmten Modellwert für zumindest einen Betriebsparameter einer der Verarbeitungsanlagen zur Verfügung. Im nicht einschränkenden Beispiel der Zeichnung handelt es sich dabei um den Verarbeitungsschritt Umformen 182.

Die Ausgabe des Computermodells 165 kann noch weitere Spezifikationen enthalten, beispielsweise eine Angabe eines Verarbeitungsmittels, das für einen der Verarbeitungsschritte 180, 182 an dem Metallflachprodukt 144 oder einem daraus gebildeten Zwischenprodukt 190 zu verwenden ist. Alternativ oder ergänzend kann das Steuersystem 160 einen oder mehrere verfügbare Verarbeitungsmittel den einzelnen Verarbeitungsschritten 180, 182 zuordnen. Das Steuerprogramm 166 des Steuersystems und / oder das Computermodell 165 prüft z.B. nach erfolgter Zuordnung der Verarbeitungsmittel, ob alle vorgesehenen Werte zur Einstellung der Betriebsparameter der Verarbeitungsmittel während der Herstellung des Metallwerkstücks 192 in ihren jeweils vorgegebenen zulässigen Wertebereichen liegen.

Ist dies der Fall, so startet das Steuerprogramm 166 daraufhin, z.B. zu einem vorgegebenen Fertigungszeitpunkt, den Verarbeitungsprozess 180, 182 zur Herstellung des Metallwerkstücks 192. Dabei wird z.B. der Betriebsparameter des Umformprozesses 182 auf den von dem Computermodell 165 ausgegebenen Modellwert gesetzt, in dessen Bestimmung der technische Datensatz 120 eingegangen ist. Auf diese Weise könnte die Steuerung des Umformprozesses 182 in Abhängigkeit von Eigenschaften des Metallflachprodukts 144 erfolgen, welche während der Herstellung des Metallflachprodukts 144 erfasst wurden und möglicherweise ausschließlich während der Herstellung des Metallflachprodukts 144 beobachtbar waren.

Während der Herstellung des Metallwerkstücks 192 stehen vorzugsweise diverse technische Informationen zur Verfügung, die als technische Daten 170 durch Protokollierung von z.B. gemessenen oder vorgegebenen Betriebsparametern der Verarbeitungsanlagen und / oder Messung von an dem Metallflachprodukt 144, den Zwischenprodukten 190 und / oder dem Metallwerkstück 192 beobachtbaren Messgrößen erfasst werden. Die erfassten technischen Daten 170 werden z.B. über die Steuerschnittstelle 163 an die Steuerungsvorrichtung 160 übertragen und dort optional mit zusätzlichen technischen Daten 170 wie beispielsweise einem Zeitstempel und / oder Kennungen der an der Verarbeitung des Metallflachprodukts 144 beteiligten Verarbeitungsanlagen ergänzt. Die so im Speicher 164 des Steuersystems 160 aggregierten technischen Daten 170 bilden einen Verarbeitungsdatensatz 170.

In der in der Zeichnung gezeigten Konfiguration ist zusätzlich ein Empfang eines Verarbeitungsdatensatzes 170 durch das Steuersystem 110 des metallverarbeitenden Betriebs 102 von dem Steuersystem 160 des Verarbeitungswerks 104 möglich, d.h. das Netzwerk 100 stellt z.B. eine bidirektionale Datenübertragung zwischen dem metallverarbeitenden Betrieb 102 und dem Verarbeitungswerk 104 bereit. Der Verarbeitungsdatensatz 170 kann ab dem Zeitpunkt seiner Zusammenstellung von dem Steuersystem 160 des Verarbeitungswerks 104 über das Netzwerk 100 an das Steuersystem 110 des metallverarbeitenden Betriebs 102 übertragen werden bzw. durch das Steuersystem 110 des metallverarbeitenden Betriebs 102 von dem Steuersystem 160 des Verarbeitungswerks 104 abgefragt werden. Die Übertragung des technischen Datensatzes 120 und / oder des Verarbeitungsdatensatzes 170 über das Netzwerk 100 kann kryptographisch gesichert sein, um ein Ausspähen der Daten durch Dritte zu verhindern.

Das Steuersystem 110 kann daraufhin den empfangenen Verarbeitungsdatensatz 170 beispielsweise mithilfe der Mustererkennung 115 auswerten und ggf. mit weiteren, im Rahmen von früheren Verarbeitungsaufträgen vom Verarbeitungswerk 104 auf diese Weise empfangenen und im Speicher 114 des Steuersystems 110 gespeicherten Verarbeitungsdatensätzen vergleichen, um zukünftige Produktionen weiterer Metallflachprodukte durch Anpassung der Steuerung der Produktionsanlagen im Hinblick auf eines oder mehrere der in den Verarbeitungsdatensätzen enthaltenen Datenschlüssel zu optimieren.

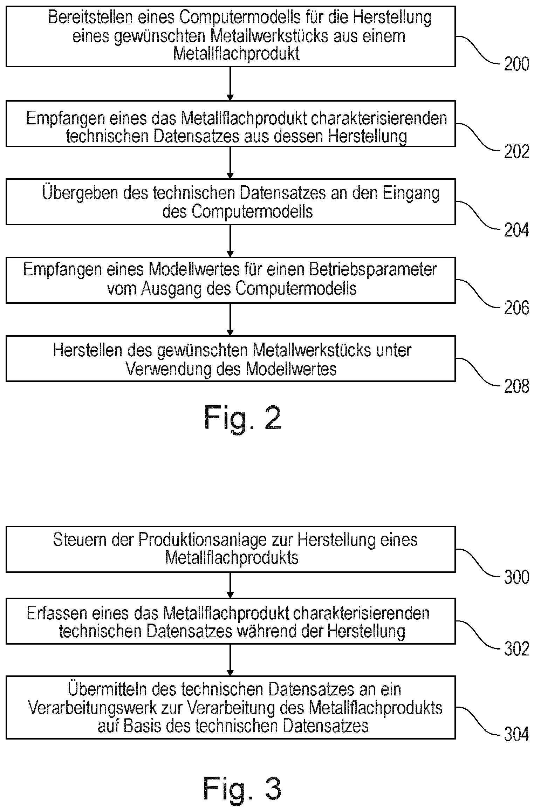

Fig. 2 zeigt ein Flussdiagramm zur schematischen Darstellung eines computerimplementierten Verfahrens zur Herstellung eines gewünschten Metallwerkstücks 192 aus einem Metallflachprodukt 144. Das in Fig. 2 gezeigte Verfahren wird hier am Beispiel einer Implementierung durch eine Steuerungsvorrichtung 160 eines Verarbeitungswerks 104 erläutert.

In einem Schritt 200 stellt die Steuerungsvorrichtung 160 ein Computermodell 165 für eine Herstellung des gewünschten Metallwerkstücks 192 aus dem Metallflachprodukt 144 in einem Verarbeitungsprozess 180, 182 bereit. Ein Verarbeitungsschritt 182 des Verarbeitungsprozess 180, 182 wird durch ein Verarbeitungsmittel ausgeführt, dessen Wirkweise auf das Metallflachprodukt 144 oder ein daraus gebildetes Zwischenprodukt 190 durch einen Betriebsparameter kontrolliert werden kann.

In einem Schritt 202 empfängt die Steuerungsvorrichtung 160, typischerweise von einem Hersteller des Metallflachprodukts 144 wie z.B. dem metallverarbeitenden Betrieb 102, einen das Metallflachprodukt 144 charakterisierenden technischen Datensatz 120, dessen Daten zumindest teilweise während der Herstellung des Metallflachprodukts 144 erfasst wurden. Diesen technischen Datensatz 120 übergibt 204 das Steuersystem 160 an einen Eingang des Computermodells 165.

Daraufhin führt der Prozessor 162 des Steuersystems 160 das Computermodell 165 aus und simuliert dabei den Herstellungsprozess 180, 182 anhand eines von dem Computermodell 165 implementierten mathematischen Modells. Das Computermodell 165 enthält Modellspezifikationen der für die Herstellung erforderlichen Verarbeitungsmittel und optimiert deren Wirkweise durch Einstellung der diesen zugeordneten Betriebsparameter.

Für wenigstens einen dieser Betriebsparameter empfängt 206 die Steuerungsvorrichtung 160 von einem Ausgang des Computermodells 165 nach Beendigung der Simulation einen Modellwert, auf den das den Verarbeitungsschritt 182 implementierende Verarbeitungsmittel zur optimierten Herstellung des Metallwerkstücks 192 zu setzen ist.

Bei der nachfolgenden Herstellung 208 des gewünschten Metallwerkstücks 192 steuert das Steuersystem 160 anhand des Steuerprogramms 166 z.B. über die Steuerschnittstelle 163 die die Verarbeitungsschritte 180, 182 implementierenden Verarbeitungsmittel und setzt dabei den Betriebsparameter des den Verarbeitungsschritt 182 implementierenden Verarbeitungsmittels auf den Modellwert.

Fig. 3 zeigt ein Flussdiagramm zur schematischen Darstellung eines computerimplementierten Verfahrens zur Steuerung einer Produktionsanlage eines metallverarbeitenden Betriebs 102. Das in Fig. 3 gezeigte Verfahren wird hier am Beispiel einer Implementierung durch eine Steuerungsvorrichtung 110 des metallverarbeitenden Betriebs 102 erläutert.

In einem Schritt 300 steuert das Steuersystem 110 die Produktionsanlage anhand eines im Speicher 114 des Steuersystems 110 hinterlegten und durch einen Prozessor 112 des Steuersystems 110 ausgeführten Steuerprogramms 116 über die Steuerschnittstelle 113 zur Herstellung eines Metallflachprodukts 144. Dabei werden technische Daten des Herstellungsprozesses (z.B. Messdaten und Betriebsparameter) erfasst 302, über die Steuerungsschnittstelle 113 an die Steuerungsvorrichtung 110 übertragen, optional durch weitere im Speicher 114 hinterlegte Daten wie z.B. einen Zeitstempel und / oder einen Identifikator für einen die Herstellung überwachenden Mitarbeiter ergänzt und als technischer Datensatz 120 im Speicher 114 gespeichert. Der gespeicherte technische Datensatz 120 wird in einem Schritt 304 an ein Verarbeitungswerk 104 zur Verarbeitung des Metallflachprodukts 144 übermittelt (z.B. durch Versand an oder Abholung durch eine Steuerungsvorrichtung 160 des Verarbeitungswerks 104), sodass die Steuerungsvorrichtung 160 die nachfolgende Verarbeitung des Metallflachprodukts 144 unter Berücksichtigung des technischen Datensatzes 120 planen und steuern kann.

### Bezugszeichenliste

- 100: Netzwerk
- 102: Metallverarbeitender Betrieb
- 104: Verarbeitungswerk
- 110: Steuerungsvorrichtung
- 111: Netzwerkschnittstelle
- 112: Prozessor
- 113: Steuerschnittstelle
- 114: Speicher
- 115: Mustererkennung
- 116: Steuerprogramm
- 120: Technischer Datensatz
- 130: Herstellungsschritt
- 140: Bramme
- 142: Zwischenprodukt
- 144: Metallflachprodukt
- 160: Steuerungsvorrichtung
- 161: Netzwerkschnittstelle
- 162: Prozessor
- 163: Steuerschnittstelle
- 164: Speicher
- 165: Computermodell
- 166: Steuerprogramm
- 170: Verarbeitungsdatensatz
- 180: Verarbeitungsschritt
- 182: Verarbeitungsschritt
- 190: Zwischenprodukt
- 192: Metallwerkstück

## Patentansprüche

1. Computerimplementiertes Verfahren zur Herstellung eines gewünschten Metallwerkstücks (192) aus einem Metallflachprodukt (144), wobei das Metallflachprodukt ein gehaspeltes Band ist, wobei das Verfahren aufweist:
- Bereitstellen (200) eines Computermodells (165) für eine Herstellung des gewünschten Metallwerkstücks (192) aus dem Metallflachprodukt (144) in einem Verarbeitungsprozess (180, 182), wobei das Computermodell (165) einen Eingang und einen Ausgang aufweist, wobei der Verarbeitungsprozess (180, 182) einen Verarbeitungsschritt (182) an dem Metallflachprodukt (144) durch ein Verarbeitungsmittel aufweist,
- Empfangen (202) eines das Metallflachprodukt (144) charakterisierenden technischen Datensatzes (120), wobei zumindest ein Teil der Daten des technischen Datensatzes (120) während der Herstellung des Metallflachprodukts (144) erfasst wurde,
- Übergeben (204) des technischen Datensatzes (120) an den Eingang des Computermodells (165),
- Aufgrund der Übergabe (204) des technischen Datensatzes (120), Empfangen (206) eines Modellwertes für einen Betriebsparameter des Verarbeitungsmittels vom Ausgang des Computermodells (165),
- Herstellen (208) des gewünschten Metallwerkstücks (192) durch Steuern des Verarbeitungsprozesses (180, 182), wobei die Steuerung des Verarbeitungsprozesses (180, 182) ein Steuern des Verarbeitungsmittels zum Durchführen des Verarbeitungsschritts (182) an dem Metallflachprodukt (144) mit dem auf den Modellwert gesetzten Betriebsparameter aufweist,
wobei das Metallflachprodukt (144) logisch in eine Vielzahl von Segmenten unterteilt ist, wobei der technische Datensatz (120) für jedes der Segmente das Segment charakterisierende technische Daten aufweist.

2. Verfahren nach Anspruch 1, wobei der technische Datensatz (120) geometrische Daten, materialspezifische Daten und / oder oberflächenspezifische Daten des Metallflachprodukts aufweist.

3. Verfahren nach einem der vorigen Ansprüche, wobei die Herstellung des Metallflachprodukts (144) einen Herstellungsschritt (130) aufweist, wobei der Herstellungsschritt (130) ausgewählt ist aus einem Gießen, einem Warmwalzen, einem Kaltwalzen, einem Beizen, einem Glühen, einer Oberflächenveredelung und einem Dressieren, wobei der während der Herstellung des Metallflachprodukts (144) erfasste Teil des technischen Datensatzes (120) einen Parameter des Herstellungsschritts (130) oder einen während des Herstellungsschritts (130) erfassten Messwert aufweist.

4. Verfahren nach Anspruch 3, wobei der Parameter des Herstellungsschritts (130) ausgewählt ist aus einer Bezeichnung eines Gießverfahrens, einer Gießtemperatur, einer Bezeichnung eines Walzverfahrens, einer Walzgeschwindigkeit, einer Walzdicke, einer Walzenrauigkeit, einer Walzenballigkeit, einer Bezeichnung eines Beizverfahrens, einer Glühtemperatur, einer Glühdauer, einer Bezeichnung eines Oberflächenveredelungsverfahrens, einer Bezeichnung eines für die etwaige Oberflächenveredelung verwendeten Materials, einer Bezeichnung eines Dressierverfahrens und einem Dressiergrad.

5. Verfahren nach einem der vorigen Ansprüche, wobei der technische Datensatz (120) einen etwaigen Fehler des Metallflachprodukts (144) charakterisierende Daten aufweist, und/oder
wobei das Metallflachprodukt (144) eine Oberflächenveredelung und / oder eine Beschichtung aufweist.

6. Verfahren nach einem der vorigen Ansprüche, wobei das Metallwerkstück (192) in einem Verarbeitungswerk (104) hergestellt wird, wobei das Verarbeitungswerk (104) das Metallflachprodukt (144) und den technischen Datensatz (120) von einem metallverarbeitenden Betrieb (102) empfängt, wobei optional das Verfahren ein Erfassen eines den Verarbeitungsschritt (182) charakterisierenden Verarbeitungsdatensatzes (170) während der Durchführung des Verarbeitungsschritts (182) an dem Metallflachprodukt (144) sowie ein Übertragen des Verarbeitungsdatensatzes (170) an den metallverarbeitenden Betrieb (102) zur Anpassung einer Steuerung einer Produktionsanlage des metallverarbeitenden Betrieb (102) auf Basis des Verarbeitungsdatensatzes (170) umfasst.

7. Verfahren nach einem der vorigen Ansprüche, wobei das Verarbeitungsmittel ausgewählt ist aus einer Umformvorrichtung, einer Teilvorrichtung, einer Fügevorrichtung, einer Wärmebehandlungsvorrichtung, einer Richtvorrichtung, einer Sortiervorrichtung, einer Oberflächenveredelungsvorrichtung und einer Vorrichtung zur Herstellung von Verbundwerkstoffen, wobei der Betriebsparameter eine Einstellung des Verarbeitungsmittels oder eine physikalische Wirkung des Verarbeitungsmittels auf das Metallflachprodukt (144) charakterisiert.

8. Verfahren nach Anspruch 1, wobei jedes Segment in wenigstens einer Richtung eine Ausdehnung von höchstens 5 Metern, vorzugsweise höchstens 1 Meter aufweist, und / oder
wobei der Betriebsparameter eine Spezifikation eines aus den Segmenten für die Herstellung des Metallwerkstücks (192) ausgewählten Segments aufweist.

9. Verfahren nach einem der vorigen Ansprüche, wobei das Verarbeitungsmittel aufgrund des technischen Datensatzes (120) und / oder des Modellwertes aus einer Vielzahl von verfügbaren Verarbeitungsmitteln ausgewählt wird, und/oder
wobei die Herstellung des gewünschten Metallwerkstücks (192) unterdrückt wird, falls der Modellwert außerhalb eines vorgegebenen Wertebereichs liegt oder falls auf Basis des Modellwertes und / oder des technischen Datensatzes (120) eine Warnung über eine Verletzung eines vorgegebenen Qualitätskriteriums im Fall einer hypothetischen Herstellung des Metallwerkstücks (192) aus dem Metallflachprodukt (144) empfangen wird.

10. Verfahren nach einem der vorigen Ansprüche, zusätzlich aufweisend:
- Für jedes aus einer Vielzahl von verfügbaren Metallflachprodukten, Empfangen des das verfügbare Metallflachprodukt jeweilig charakterisierenden technischen Datensatzes, wobei zumindest ein Teil der Daten des technischen Datensatzes während der Herstellung des verfügbaren Metallflachprodukts erfasst wurde,
- Auswählen des Metallflachprodukts (144) auf Basis der technischen Datensätze, wobei das ausgewählte Metallflachprodukt (144) das Metallflachprodukt ist, welches für die Durchführung des Verfahrens zur Herstellung des gewünschten Metallwerkstücks (192) verwendet wird.

11. Verfahren nach Anspruch 10, wobei das Auswählen aufweist:
- Empfangen eines das gewünschte Metallwerkstück (192) charakterisierenden Spezifikationsdatensatzes,
- Für zumindest einen Teil der technischen Datensätze, Berechnen einer Abweichungsmetrik des technischen Datensatzes von dem Spezifikationsdatensatz,
- Identifizieren des Metallflachprodukts, für welches die Abweichungsmetrik minimiert ist;
und / oder wobei das Auswählen aufweist:
- Für jeden von zumindest einem Teil der technischen Datensätze:
- Übergeben des technischen Datensatzes an den Eingang des Computermodells (165),
- Aufgrund der Übergabe des technischen Datensatzes, Empfangen eines Modellwertes für den Betriebsparameter vom Ausgang des Computermodells (165),
- Vergleichen des Modellwertes mit einem vorgegebenen Optimalwert des Betriebsparameters,
- Identifizieren des Metallflachprodukts, für welches die Differenz zum Optimalwert minimiert ist.

12. Verfahren nach einem der vorigen Ansprüche, zusätzlich aufweisend:
- Vergleichen des Modellwertes mit einem Vergleichswert des Betriebsparameters, wobei der Vergleichswert eine hypothetische Verwendung des Verarbeitungsmittels zur Durchführung eines weiteren Verarbeitungsschritts an einem weiteren Metallflachprodukt charakterisiert,
- Falls der Betrag der Differenz zwischen dem Modellwert und dem Vergleichswert einen vorgegebenen Grenzwert unterschreitet, zeitliches Gruppieren des Verarbeitungsschritts (182) mit dem weiteren Verarbeitungsschritt.

13. Vorrichtung zur Steuerung der Herstellung eines gewünschten Metallwerkstücks (192) aus einem Metallflachprodukt (144), wobei das Metallflachprodukt ein gehaspeltes Band ist, wobei die Vorrichtung einen ersten Prozessor (162) und einen ersten Speicher (164) mit Programminstruktionen (166) aufweist, wobei die Ausführung der Programminstruktionen (166) die Vorrichtung zur Steuerung der Herstellung eines gewünschten Metallwerkstücks (192) aus einem Metallflachprodukt (144) veranlasst zum:
- Bereitstellen (200) eines Computermodells (165) für eine Herstellung des gewünschten Metallwerkstücks (192) aus dem Metallflachprodukt (144) in einem Verarbeitungsprozess (180, 182), wobei das Computermodell (165) einen Eingang und einen Ausgang aufweist, wobei der Verarbeitungsprozess (180, 182) einen Verarbeitungsschritt (182) an dem Metallflachprodukt (144) durch ein Verarbeitungsmittel aufweist,
- Empfangen (202) eines das Metallflachprodukt (144) charakterisierenden technischen Datensatzes (120), wobei zumindest ein Teil der Daten des technischen Datensatzes (120) während der Herstellung des Metallflachprodukts (144) erfasst wurde,
- Übergeben (204) des technischen Datensatzes (120) an den Eingang des Computermodells (165),
- Aufgrund der Übergabe (204) des technischen Datensatzes (120), Empfangen (206) eines Modellwertes für einen Betriebsparameter des Verarbeitungsmittels vom Ausgang des Computermodells (165),
- Herstellen (208) des gewünschten Metallwerkstücks (192) durch Steuern des Verarbeitungsprozesses (180, 182), wobei die Steuerung des Verarbeitungsprozesses (180, 182) ein Steuern des Verarbeitungsmittels zum Durchführen des Verarbeitungsschritts (182) an dem Metallflachprodukt (144) mit dem auf den Modellwert gesetzten Betriebsparameter aufweist,
wobei das Metallflachprodukt (144) logisch in eine Vielzahl von Segmenten unterteilt ist, wobei der technische Datensatz (120) für jedes der Segmente das Segment charakterisierende technische Daten aufweist.

14. Computerprogrammprodukt mit von einem Prozessor ausführbaren Instruktionen zur Durchführung des Verfahrens nach einem der vorigen Ansprüche 1-12.

## Claims

1. A computer-implemented method for producing a desired metal workpiece (192) from a flat metal product (144), the flat metal product being coiled strip, the method comprising:
- providing (200) a computer model (165) for producing the desired metal workpiece (192) from the flat metal product (144) in a processing process (180, 182), wherein the computer model (165) has an input and an output, and wherein the processing process (180, 182) comprises a processing step (182) on the flat metal product (144) by a processing means;
- receiving (202) a technical data record (120) characterizing the flat metal product (144), wherein at least some of the data of the technical data record (120) was detected during the production of the flat metal product (144);
- transferring (204) the technical data record (120) to the input of the computer model (165);
- based on the transfer (204) of the technical data record (120), receiving (206) a model value for an operating parameter of the processing means from the output of the computer model (165); and
- producing (208) the desired metal workpiece (192) by controlling the processing process (180, 182), wherein the control of the processing process (180, 182) comprises controlling the processing means for carrying out the processing step (182) on the flat metal product (144) using the operating parameter set to the model value,
the flat metal product (144) being logically divided into a plurality of segments, and the technical data record (120), for each of the segments, comprising technical data characterizing the segment.

2. The method according to claim 1, wherein the technical data record (120) comprises geometric data, material-specific data and/or surface-specific data of the flat metal product.

3. The method according to any one of the preceding claims, wherein the production of the flat metal product (144) comprises a production step (130), the production step (130) being selected from casting, hot rolling, cold rolling, pickling, annealing, surface finishing and temper rolling, the portion of the technical data record (120) detected during the production of the flat metal product (144) comprising a parameter of the production step (130) or a measurement value detected during the production step (130).

4. The method according to claim 3, wherein the parameter of the production step (130) is selected from a designation of a casting method, a casting temperature, a designation of a rolling method, a rolling speed, a rolling thickness, a roll roughness, a roll convexity, a designation of a pickling method, an annealing temperature, an annealing duration, a designation of a surface finishing method, a designation of a material used for the potential surface finishing, a designation of a temper rolling method, and a temper rolling degree.

5. The method according to any one of the preceding claims, wherein the technical data record (120) comprises data characterizing a potential defect of the flat metal product (144), and/or
wherein the flat metal product (144) has a surface finish and/or a coating.

6. The method according to any one of the preceding claims, wherein the metal workpiece (192) is produced in a processing plant (104), the processing plant (104) receiving the flat metal product (144) and the technical data record (120) from a metal-processing shop (102), the method optionally comprising detecting a processing data record (170), which characterizes the processing step (182), while the processing step (182) is being carried out on the flat metal product (144), and transmitting the processing data record (170) to the metal-processing shop (102) for adapting a control of a production system of the metal-processing shop (102) based on the processing data record (170).

7. The method according to any one of the preceding claims, wherein the processing means is selected from a metal-forming device, an indexing device, a joining device, a heat treating device, a straightening device, a sorting device, a surface finishing device, and a device for producing composite materials, the operating parameter characterizing a setting of the processing means or a physical action of the processing means on the flat metal product (144).

8. The method according to claim 1, wherein each segment, in at least one direction, has an extension of no more than 5 meters, and preferably no more than 1 meter, and/or
wherein the operating parameter has a specification of a segment selected from the segments for the production of the metal workpiece (192).

9. The method according to any one of the preceding claims, wherein the processing means is selected from a plurality of available processing means based on the technical data record (120) and/or of the model value, and/or
wherein the production of the desired metal workpiece (192) is suppressed if the model value is outside a predefined value range, or if, based on the model value and/or the technical data record (120), a warning about a violation of a predefined quality criterion is received in the case of a hypothetical production of the metal workpiece (192) from the flat metal product (144).

10. The method according to any one of the preceding claims, additionally comprising:
- for each from a plurality of available flat metal products, receiving the technical data record **characterizing in** each case the available flat metal product, wherein at least some of the data of the technical data record was detected during the production of the available flat metal product; and
- selecting the flat metal product (144) based on the technical data records, wherein the selected flat metal product (144) is the flat metal product that is used to carry out the method for producing the desired metal workpiece (192).

11. The method according to claim 10, the selection comprising:
- receiving a specification data record characterizing the desired metal workpiece (182);
- for at least some of the technical data records, calculating a deviation metric of the technical data record from the specification data record; and
- identifying the flat metal product for which the deviation metric is minimized; and/or the selection comprising:
- for each of at least some of the technical data records:
- transferring the technical data record to the input of the computer model (165);
- based on the transfer of the technical data record, receiving a model value for the operating parameter from the output of the computer model (165); and
- comparing the model value to a predefined optimal value of the operating parameter; and
- identifying the flat metal product for which the difference with respect to the optimal value is minimized.

12. The method according to any one of the preceding claims, additionally comprising:
- comparing the model value to a comparison value of the operating parameter, wherein the comparison value characterizes a hypothetical use of the processing means for carrying out a further processing step on a further flat metal product; and
- if the absolute value of the difference between the model value and the comparison value falls short of a predefined threshold value, temporally grouping the processing step (182) with the further processing step.

13. A device for controlling the production of a desired metal workpiece (192) from a flat metal product (144), the flat metal product being coiled strip, the device comprising a first processor (162) and a first memory (164) including program instructions (166), the execution of the program instructions (166) prompting the device for controlling the production of a desired metal workpiece (192) from a flat metal product (144) to:
- provide (200) a computer model (165) for producing the desired metal workpiece (192) from the flat metal product (144) in a processing process (180, 182), wherein the computer model (165) has an input and an output, and wherein the processing process (180, 182) comprises a processing step (182) on the flat metal product (144) by a processing means;
- receive (202) a technical data record (120) characterizing the flat metal product (144), wherein at least some of the data of the technical data record (120) was detected during the production of the flat metal product (144);
- transfer (204) the technical data record (120) to the input of the computer model (165);
- based on the transfer (204) of the technical data record (120), receive (206) a model value for an operating parameter of the processing means from the output of the computer model (165); and
- produce (208) the desired metal workpiece (192) by controlling the processing process (180, 182), wherein the control of the processing process (180, 182) comprises controlling the processing means for carrying out the processing step (182) on the flat metal product (144) using the operating parameter set to the model value,
the flat metal product (144) being logically divided into a plurality of segments, and the technical data record (120), for each of the segments, comprising technical data characterizing the segment.

14. A computer program product having instructions executable by a processor for carrying out the method according to any one of the preceding claims 1-12.

## Revendications

1. Procédé mis en oeuvre par ordinateur permettant la fabrication d'une pièce métallique (192) souhaitée à partir d'un produit plat métallique (144), le produit plat métallique étant une bande hachée, le procédé présentant :
- la mise au point (200) d'un modèle informatique (165) pour une fabrication de la pièce métallique (192) souhaitée à partir du produit plat métallique (144) dans un processus de traitement (180, 182), où le modèle informatique (165) présente une entrée et une sortie, où le processus de traitement (180, 182) présente une étape de traitement (182) sur le produit plat métallique (144) par un moyen de traitement,
- la réception (202) d'un ensemble de données techniques (120) caractérisant le produit plat métallique (144), où au moins une partie des données de l'ensemble de données techniques (120) a été enregistrée pendant la fabrication du produit plat métallique (144),
- la transmission (204) de l'ensemble de données techniques (120) à l'entrée du modèle informatique (165),
- en raison de la transmission (204) de l'ensemble de données techniques (120), la réception (206) d'une valeur modèle pour un paramètre de fonctionnement du moyen de traitement à partir de la sortie du modèle informatique (165),
- la fabrication (208) de la pièce métallique (192) souhaitée par la commande du processus de traitement (180, 182), où la commande du processus de traitement (180, 182) présente une commande du moyen de traitement pour l'exécution de l'étape de traitement (182) sur le produit plat métallique (144) avec le paramètre de fonctionnement réglé sur la valeur modèle,
dans lequel le produit plat métallique (144) est subdivisé de manière logique en une multiplicité de segments, où l'ensemble de données techniques (120) présente pour chacun des segments les données techniques caractérisant le segment.

2. Procédé selon la revendication 1, dans lequel l'ensemble de données techniques (120) présente des données géométriques, des données spécifiques pour la matière et/ou des données spécifiques pour la surface du produit plat métallique.

3. Procédé selon l'une des revendications précédentes, dans lequel la fabrication du produit plat métallique (144) présente une étape de fabrication (130), où l'étape de fabrication (130) est choisie parmi un coulage, un laminage à chaud, un laminage à froid, une teinture, un chauffage au rouge, un affinage de surface et un écrouissage, où la partie de l'ensemble de données techniques (120) enregistrée pendant la fabrication du produit plat métallique (144) présente un paramètre de l'étape de fabrication (130) ou une valeur de mesure enregistrée pendant l'étape de fabrication (130).

4. Procédé selon la revendication 3, dans lequel le paramètre de l'étape de fabrication (130) est choisi parmi une caractéristique du procédé de coulage, une température de coulage, une caractéristique du procédé de laminage, une vitesse de laminage, une épaisseur de laminage, une rugosité de laminage, un bombement de laminage, une caractéristique d'un procédé de teinture, une température de chauffage au rouge, une durée de chauffage au rouge, une caractéristique d'un procédé d'affinage de surface, une caractéristique d'une matière employée pour un affinage de surface éventuel, une caractéristique d'un procédé d'écrouissage et un degré d'écrouissage.

5. Procédé selon l'une des revendications précédentes, dans lequel l'ensemble de données techniques (120) présente des données caractérisant un défaut éventuel du produit plat métallique (144), et/ou
dans lequel le produit plat métallique (144) présente un affinage de surface et/ou un revêtement.

6. Procédé selon l'une des revendications précédentes, dans lequel la pièce métallique (192) est fabriquée dans un atelier de traitement (104), où l'atelier de traitement (104) réceptionne le produit plat métallique (144) et l'ensemble de données techniques (120) à partir d'un atelier de traitement du métal (102), où, éventuellement, le procédé comprend une détection d'un ensemble de données de traitement (170) caractérisant l'étape de traitement (182) pendant l'exécution de l'étape de traitement (182) sur le produit plat métallique (144) ainsi qu'une transmission de l'ensemble de données de traitement (170) à l'atelier de traitement du métal (102) pour l'adaptation d'une commande d'une installation de production de l'atelier de traitement du métal (102) sur la base de l'ensemble de données de traitement (170).

7. Procédé selon l'une des revendications précédentes, dans lequel le moyen de traitement est choisi parmi un dispositif de formage, un dispositif de fractionnement, un dispositif d'assemblage, un dispositif de traitement thermique, un dispositif d'orientation, un dispositif de triage, un dispositif d'affinage de surface et un dispositif de fabrication de substances composites, où le paramètre de fonctionnement caractérise un réglage du moyen de traitement ou un effet physique du moyen de traitement sur le produit plat métallique (144).

8. Procédé selon la revendication 1, dans lequel chaque segment présente dans au moins une direction une extension d'au maximum 5 mètres, de préférence d'au maximum 1 mètre, et/ou
dans lequel le paramètre de fonctionnement présente une spécification d'un segment choisi pour la fabrication de la pièce métallique (192).

9. Procédé selon l'une des revendications précédentes, dans lequel le moyen de traitement est choisi sur la base de l'ensemble données techniques (120) et/ou de la valeur modèle à partir d'une multiplicité de moyens de traitement disponibles, et/ou
dans lequel la fabrication de la pièce métallique (192) souhaitée est refoulée dans le cas où la valeur modèle se situe en-dehors de la plage de valeurs prédéfinies ou dans le cas où, sur la base de la valeur modèle et/ou de l'ensemble de données techniques (120), un avertissement concernant une violation d'un critère de qualité prédéfini est réceptionné dans le cas d'une fabrication hypothétique de la pièce métallique (192) à partir du produit plat métallique (144).

10. Procédé selon l'une des revendications précédentes, présentant en outre :
- pour chaque produit parmi une multiplicité de produits plats métalliques disponibles, la réception de l'ensemble de données techniques caractérisant respectivement le produit plat métallique disponible, où au moins une partie de l'ensemble de données techniques a été enregistrée pendant la fabrication du produit plat métallique disponible,
- la sélection du produit plat métallique (144) sur la base des ensembles de données techniques, où le produit plat métallique (144) est le produit plat métallique, lequel est employé pour l'exécution du procédé de fabrication de la pièce métallique (192) souhaitée.

11. Procédé selon la revendication 10, dans lequel la sélection présente :
- la réception d'un ensemble de données de spécifications caractérisant la pièce métallique (192) souhaitée,
- pour au moins une partie de l'ensemble de données techniques, le calcul d'une métrique d'un écart de l'ensemble de données techniques par rapport à l'ensemble de données de spécification,
- l'identification du produit plat métallique pour lequel la métrique d'écart est minimisée ;
et/ou dans lequel la sélection présente :
- pour chacun des au moins une partie des ensembles de données techniques :
- la transmission de l'ensemble de données techniques à l'entrée du modèle informatique (165),
- en raison de la transmission de l'ensemble de données techniques, la réception d'une valeur modèle pour le paramètre de fonctionnement à partir de la sortie du modèle informatique (165),
- la comparaison de la valeur modèle avec une valeur optimale prédéfinie du paramètre de fonctionnement,
- l'identification du produit plat métallique pour lequel la différence est minimisée à la valeur optimale.

12. Procédé selon l'une des revendications précédentes, présentant en outre :
- la comparaison de la valeur modèle avec une valeur de comparaison du paramètre de fonctionnement, où la valeur de comparaison caractérise un emploi hypothétique du moyen de traitement pour l'exécution d'une nouvelle étape de traitement sur un nouveau produit plat métallique,
- dans le cas où la contribution de la différence entre la valeur modèle et la valeur de comparaison est en-dessous d'une valeur limite prédéfinie, le regroupement dans le temps de l'étape de traitement (182) et de la nouvelle étape de traitement.

13. Dispositif de commande de la fabrication d'une pièce métallique (192) souhaitée à partir d'un produit plat métallique (144), où le produit plat métallique est une bande hachée, où le dispositif présente un premier processeur (162) et une première mémoire (164) avec des instructions de programme (166), où l'exécution des instructions de programme (166) fait en sorte que le dispositif commande la fabrication d'une pièce métallique (192) souhaitée à partir d'un produit plat métallique (144) pour :
- la mise au point (200) d'un modèle informatique (165) pour une fabrication de la pièce métallique (192) souhaitée à partir du produit plat métallique (144) dans un processus de traitement (180, 182), où le modèle informatique (165) présente une entrée et une sortie, où le processus de traitement (180, 182) présente une étape de traitement (182) sur le produit plat métallique (144) par un moyen de traitement,
- la réception (202) d'un ensemble de données techniques (120) caractérisant le produit plat métallique (144), où au moins une partie des données de l'ensemble de données techniques (120) a été enregistrée pendant la fabrication du produit plat métallique (144),
- la transmission (204) de l'ensemble de données techniques (120) à l'entrée du modèle informatique (165),
- en raison de la transmission (204) de l'ensemble de données techniques (120), la réception (206) d'une valeur modèle pour un paramètre de fonctionnement du moyen de traitement à partir de la sortie du modèle informatique (165),
- la fabrication (208) de la pièce métallique (192) souhaitée par la commande du processus de traitement (180, 182), où la commande du processus de traitement (180, 182) présente une commande du moyen de traitement pour l'exécution de l'étape de traitement (182) sur le produit plat métallique (144) avec le paramètre de fonctionnement réglé sur la valeur modèle,
dans lequel le produit plat métallique (144) est subdivisé de manière logique en une multiplicité de segments, où l'ensemble de données techniques (120) présente pour chacun des segments les données techniques caractérisant le segment.

14. Produit-programme informatique avec des instructions exécutables par un processeur pour l'exécution du procédé selon l'une des revendications précédentes 1 à 12.
